Europäisches Patentamt

European Patent Office

Office européen des brevets

(19)

(11) Publication number: **0 407 305 A2**

# EUROPEAN PATENT APPLICATION

(12)

(21) Application number: **90401954.4**

(51) Int. Cl.5: **G11B 15/68**

(22) Date of filing: **05.07.90**

(30) Priority: **05.07.89 JP 79312/89**

(43) Date of publication of application:
**09.01.91 Bulletin 91/02**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Hamashima, Hiroyoshi**
**C/o Sony Corporation, 7-35 Kitashinagawa**
**6-chome** .
**Shinagawa-ku, Tokyo(JP)**

(74) Representative: **Thévenet, Jean-Bruno et al**
**Cabinet BEAU DE LOMENIE 55 rue**
**d'Amsterdam**
**F-75008 Paris(FR)**

(54) **Automatic cassette changer.**

(57) In an automatic cassette changer which comprises a plurality of store shelves (5) for accomodating respective cassettes (2), a reproducing device (6) for reproducing information from a recording medium accomodated in the cassette (2), and a carriage (3) to transport the cassette (2), which has been accomodated in the store shelf (5), to the reproducing device (6), the store shelf (5) has a base plate (37) on which the cassette (2) is held, and urging means (42) disposed at opposite sides of the base plate so as to press respective sides of the cassette (2) toward the center of the base plate (37) when the cassette (2) is placed on the base plate (37).

FIG.6

# AUTOMATIC CASSETTE CHANGER

## BACKGROUND OF THE INVENTION

### Field of the Invention

This invention relates to an automatic cassette changer in which a plurality of cassettes, each of which accommodates a recording medium, are selectively loaded in turn into a reproducing device to reproduce information from the recording medium, and particularly, relates to such an automatic cassette changer as to have store shelves in which the centers of the cassettes accommodated therein are automatically positioned in coincidence with those of the store shelves.

### Description of the Prior Art

The Japanese Patent Publication Open to Public Inspection No. 55776/1989 discloses, for example, an automatic cassette changer in which a plurality of video cassettes, each of which accommodates a magnetic tape of eight millimeters wide (hereinafter referred to simply as a 8 mm video cassette), are selectively loaded in turn into a recording medium by the help of a carriage so as to reproduce image information from the magnetic tape.

In such automatic cassette changer, there frequently takes place the motion of delivering the cassette from the store shelf to the carriage, or inversely from the carriage to the store shelf. If the center cassette does not coincide with the center of the store shelf during this motion of delivering the cassette, there might occur a problem that the carriage is unable to conveniently receive the cassette particularly upon delivery of the cassette from the store shelf to the carriage, thus causing the automatic cassette changer to discontinue its motion. The present invention will provide an automatic cassette changer possessing such store shelves as to enable the centers of the cassettes always to coincide automatically with the centers of store shelves to prevent the occurrence of the problem.

### Objects of the Invention

The main object of the present invention is to provide an automatic cassette changer possessing store shelves which have been designed to enable the centers cassettes always to coincide with the centers of the store shelves.

Another object of the present invention is to provide an automatic cassette changer which has been designed to enable the assembling process of store shelves to be simplified.

## SUMMARY OF THE INVENTION

To achieve the main object of the present invention, in an automatic cassette changer which has a plurality of store shelves for storing cassettes, a reproducing device for reproducing information signals from recording media stored in the cassettes, and a carriage to carry the respective cassettes stored in the store shelves to the reproducing device, the store shelf comprises a base plate to hold a cassette, and urging means to be provided at opposite ends of the base plate and urge the abutted sides of the cassette in a direction of the center of the base plate when the cassette is placed on the base plate.

To achieve another object of the present invention, in an automatic cassette changer which has a plurality of store shelves for storing cassettes, a reproducing device for reproducing information signals from recording media stored in the cassettes, and a carriage to carry the respective cassettes stored in the store shelves to the reproducing device, a base plate for holding a cassette and urging means to be provided at opposite ends of the base plate so as to urge the abutted sides of the cassette in a direction of the center of the base plate when the cassette is placed on the base plate, are integrally made of synthetic resin.

## BRIEF DESCRIPTION OF THE DRAWINGS

Figure 1 is a perspective view showing one embodiment of an automatic cassette changer in accordance with the present invention;

Figure 2 is a plan view showing a motion of the automatic cassette changer of Fig. 1;

Figure 3A to 3C are plan views showing cassette delivering motions of the automatic cassette changer of Fig. 1;

Figures 4A and 4B are perspective views illustrating a carriage provided in the automatic cassette changer of Fig. 1;

Figure 5 is a perspective view showing one embodiment of a store shelf provided in an automatic cassette changer in accordance with the present invention;

Figure 6 is a plan view illustrating a cassette self-aligning action in the store shelf of Fig. 5;

Figure 7 is a sectional view taken along the line VII-VII on Fig. 6;

Figures 8A and 8B are plan views illustrating motions of delivering a cassette to the store shelf of the automatic cassette changer of Fig. 1;

Figures 9A to 9C are perspective views showing various portions of a carriage provided in the automatic cassette changer of Fig. 1;

Figure 10 is a side view of a carriage provided in the automatic cassette changer of Fig. 1;

Figure 11 is a sectional view taken along the line XI-XI on Fig. 10;

Figures 12A to 12C are plan views illustrating motions of gripping means provided in the carriage of Fig. 10;

Figure 13A is a sectional view taken along the line XIIIA-XIIIA on Fig. 12A;

Figure 13B is a sectional view taken along the line XIIIB-XIIIB on Fig. 12B;

Figures 14A to 14D are plan views illustrating motions of the carriage of Fig. 10;

Figure 15 is a sectional view taken along the line XV-XV on Fig. 10;

Figures 16A and 16B are side views showing motions of changeover means provided in the carriage of Fig. 10;

Figures 17A to 17D are bottom views showing motions of guide means provided in the carriage of Fig. 10;

Figure 18 is a front view showing a cassette-in port and a cassette-out port of the automatic cassette changer of Fig. 1;

Figures 19A and 19B are sectional views illustrating motions of loading a cassette into the cassette-in port of Fig. 18;

Figure 20 is a sectional view of a slide table and a tray formed near to the cassette-in port of Fig. 18;

Figure 21 is a sectional view taken along the line XXI-XXI on Fig. 20;

Figures 22A and 22B are sectional views taken along the line XXII-XXII on Fig. 20.

Figure 23 is a sectional view taken along the line XXIII-XXIII on Fig. 22B; and

Figure 24 is a perspective view showing a driving mechanism of slide table and tray of the cassette-in port of Fig. 18.

## DETAILED DESCRIPTION OF THE PREFERRED EMBODIMENTS

One embodiment of an automatic cassette changer in accordance with the present invention will be hereunder described with reference to the accompanying drawings. The automatic cassette changer has been designed to be able to retrieve information from a plurality of 8 mm video cassettes for long hours at at time.

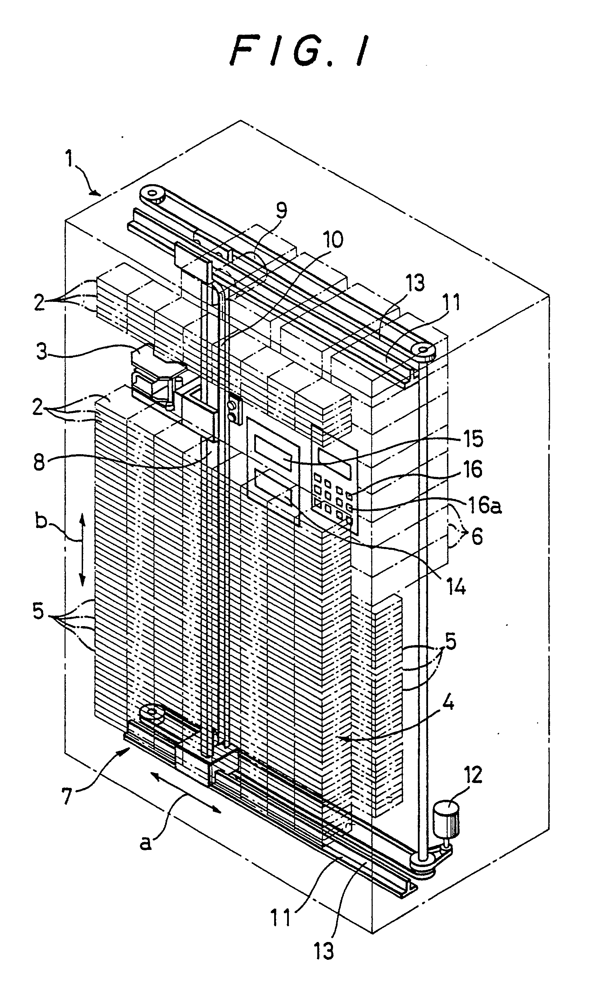

First, an automatic cassette changer 1 as a whole will be described in line with Figure 1.

A carriage 3 is provided inside the automatic cassette changer 1, and transports an 8 mm video cassette at high speed both in right and left directions (in the directions of arrow a) and in upper and lower directions (in the directions of arrow b). Stockers 4 are placed respectively in front of and at the back of a plane in which the carriage 3 moves, and each stocker 4 is provided with many store shelves 5, each of which stores a cassette 2, in multiple stages extending both rightward and leftward, and upward and downward. In addition, at the back of the plane in which the carriage 3 moves, a plurality of reproducing devices 6 of frontal loading system, which are video tape recorders exclusively used for reproducing information from the cassettes 2, are provided in multiple stages extending rightward and leftward, and upward and downward. The carriage carrying mechanism 7 possesses, for example, a vertically carrying structure in which the carriage 3 is moved upward and downward along a vertical guide by a servo motor with an encoder through a timing belt 10, and a horizontally carrying structure in which the carriage 3 is moved together with the vertical guide rail 8 in right and left directions along a horizontal guide rail by a servo-motor 12 with an encoder through a pair of upper and lower timing belts 13.

In loading the cassettes 2 in the automatic cassette changer 1, if the code numbers of the cassettes 1 are given to a console panel 16 one after another while successively inserting the cassettes 2 one by one into a cassette-in port 14, then the cassettes 2 as inserted successively into the cassette-in port 14 are carried in order into the predetermined store shelves 5, which are correspondent to the code numbers of the stockers 4, and stored therein. When the cassettes 2 are taken out from the automatic cassette changer 1, in addition, if the code numbers of the cassettes 1 are given successively to the console panel 16, then the cassettes 2 in the predetermined store shelves 5, which are correspondent to the code numbers of the stockers 4, are successively carried to a cassette-out port 15 by the carriage 3 to be shipped out.

This automatic cassette changer 1 takes out the cassettes 2 successively from inside certain store shelves 5 of the stockers 4 by the carriage 3 and supply them successively to the reproducing devices 6, thus making continuous video reproduction for many hours.

Next, the structure and motion of the automatic cassette changer 1 will be described.

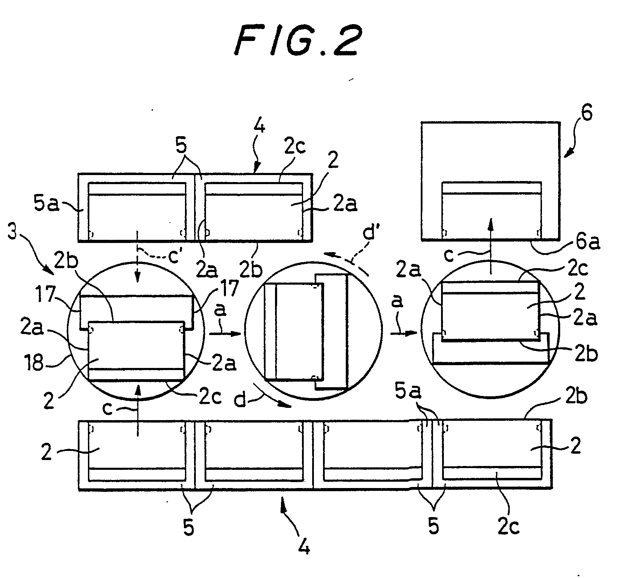

First, the carrying motion of the cassettes 2 developed by the carriage 3 between the stockers 4 and the reproducing devices 6 is outlined by way of Fig. 2.

The carriage 3 is provided with gripping means 17 which grips the right and left sides 2a of the cassette 2 to deliver the cassette and rotary table 18 which turns the gripping means 17 around at 180° within a horizontal plane. Many cassettes 2 are horizontally stored in respective store shelves 5 of the stockers 4 with their rear sides facing the side of the carriage 3 and their front lids facing the opposite side to the carriage 3.

Then, after the cassette 2 is received in the direction of an arrow c or c′ from inside a certain store shelve of the stocker 4 into the carriage 3 by the gripping means 17, the rotary table 18 is turned around at 180° in the direction of an arrow d or d′ while the carriage 3 carries the cassette 2 to a certain recording and/or reproducing device 6 in the direction of an arrow a as in Fig. 2, and the front lid 2c of the cassette 2 gripped by the gripping means 17 are in turn faced to the front of the reproducing device 6. And the cassette 2 is inserted in the direction of the arrow c from the side of the front lid 2c into the cassette insertion opening 6a of the reproducing device 6 by the gripping means 17. The cassette 2 to be inserted into the reproducing device 6 undergoes loading by the ordinary frontal-loading mechanism (not illustrated) of the reproducing device 6 for video reproduction. In addition, the motion of returning the cassette 2 after video reproduction into the original store shelf 5 of the stocker 4 is reverse to the above mentioned motion.

Description by way of Figs. 3A to 3C, in the next, is made to outline the motion of delivering the cassette 2 between the stocker 4 and the carriage 3, and the reproducing device 6 and the carriage 3.

The ends of a pair of the gripping means 17 are provided with pawls 20 bent in L-shape, which are to be fitted into a pair of recesses 19 placed in the vicinity of the rear ends 2b of the right and left sides 2a of the cassette 2, and rollers 21 composed of bearings, which press the rear sides 2b of the cassette 2. Furthermore, a self-aligning means 22, which lightly presses the cassette 2 in the direction of an arrow c′ toward opening ends 5a, is provided in each store shelf 5 of the stocker 4.

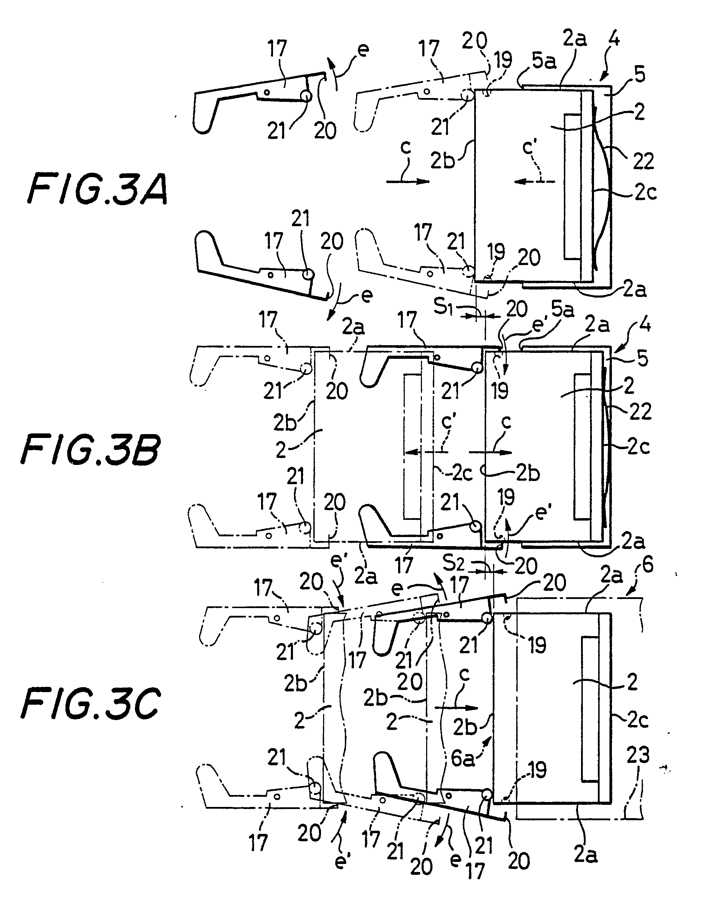

When the carriage 3 goes in the direction of an arrow c to receive the cassette 2 in each store shelf 5 of the stocker 4 by a pair of the gripping means 17, as shown in Fig. 3A, the pair of pawls 20 of the gripping means 17 opening in the direction of an arrow e are allowed to contact the rear side 2b of the cassette 2 as shown by chain lines in Fig. 3A, and with resistance against the self-aligning means 22 the cassette 2 is, as shown in Fig. 3B, pressed into the store shelf 5 by as much as a stroke S1 of about 2mm in the direction of an arrow c, followed by closing of the pair of gripping means 17 in the direction of an arrow e′. This enables the pair of pawls 20 to be always accurately fitted into the pair of recesses 19 of the cassette 2. And, thereafter, with the parir of pawls 17 drawn back in the direction of an arrow c′, the carriage 3 receives the cassette 2 from inside the store shelf 5.

When the cassette 2 in the carrige 3 is, as shown in Fig. 3C, inserted in the direction of an arrow c into the cassette insertion opening of the reproducing device 6, while pressing the cassette 2 in the direction of the arrow c by the pair of pawls 20 of the pair of gripping means 17 closing in the direction of an arrow e′ as shown by chain lines, the carriage 3 opens the pair of gripping means 17 in the direction of the arrow e in the middle of such motion as shown by two-dot chain lines. Subsequently, by pressing the rear side 2b of the cassette 2 in the direction of the arrow c with the pair of rollers 21, cassette 2 is inserted into the frontal-loading mechanism of the reproducing device 6 in the direction of the arrow c by as much as a stroke S2 of about 6mm, which is larger than the stroke S1 of about 3 mm as shown in Fig. 3B. Thus, the cassette 2 can be inserted sufficiently deeply into the frontal-loading mechanism in the direction of the arrow c, and the cassette 2 can be loaded into the reproducing device 6 with the ordinary frontal-loading mechanism 23.

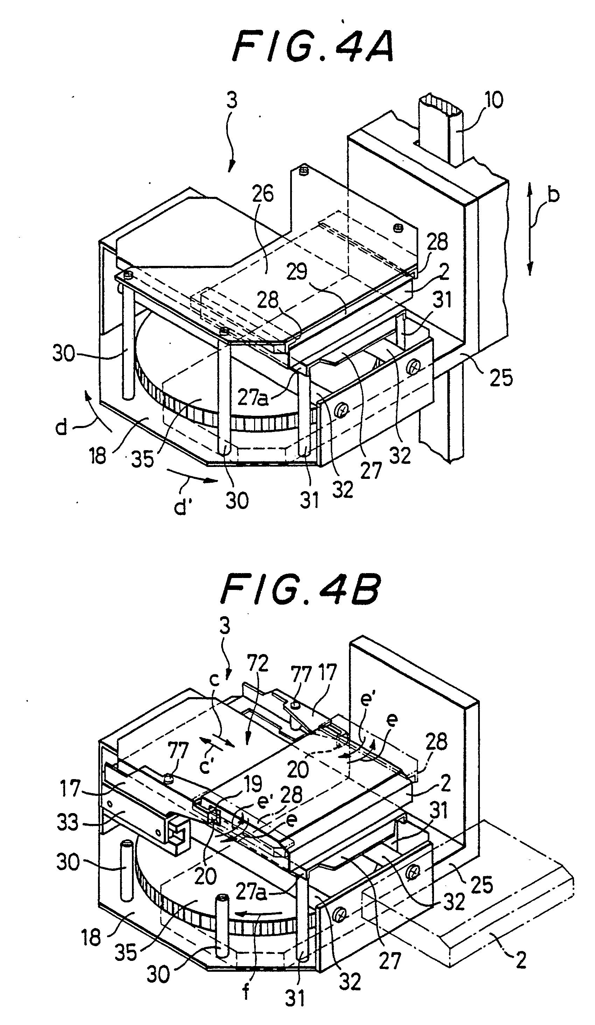

Next, the carriage 3 is outlined using Figs. 4A and 4B.

As shown in Fig. 4A, first of all, the rotary table 18 is fitted onto a substantially L-shaped base 25 attached firmly to the timing belt 10, and on the rotary table 18 is provided a horizontal cassette-placing platform 29 that is surrounded by a cover plate 26 and a cassette-loading plate 27, which are fitted horizontally having a space between the upper and lower sides, and a pair of cassette guides 28 fitted horizontally to the lower surface of the cover plate 26. Moreover, the cover plate 26 and the cassette-loading plate 27 are supported by a plurality of poles 30 and 31. The rotary table 18 is constructed so as to be turned and driven at 180° in the directions of arrows d and d′ around a vertical rotary pivot on the base 25 by a motor and gear mechanism (not shown).

As shown in Fig. 4B, a pair of guide shafts 32 are provided over the rotary table 18 and under the cassette-loading plate 27 in parallel with a cassette guide 28, and a pair of gripping means 17 are fitted to both left and right ends on a slide table 33, which is guided by these guide shafts 32 to be transferred in the directions of arrows c and c', movably in the directions of arrows e and e' via a fulcrum shaft 34. When a large gear 35 provided below the guide shaft 32, and on the rotary table 18, is driven, for example, to turn around at 360° in the direction of an arrow f by the motor and gear mechanism (not shown), a rotational motion of the large gear 35 causes a liner motion of the slide table 33, and the slide table 33 moves at one reciprocation in the directions of arrows c and c'. Then the pair of gripping means 17 are transferred in the direction of arrows c and c' along both left and right ends of the cassette-loading platform 29 by the slide table 33. And the pair of gripping means 17 are so constructed as to be driven to be opened and closed at accurate timing in the directions of arrows e and e' by a gripping means opening-closing mechanism (not illustrated herein) which is mechanically controlled dependent upon the presence of the cassette 2 in the cassette-loading platform 29 as well as utilizing the linear motion of the slide table 33.

By the pair of gripping means 17, the cassette 2, while being guided between the pair of cassette guide 28, is delivered horizontally in the directions of arrows c anc c' between the cassette-placing platform 29 of the carriage 3 and each store shelf 2 as well as the frontal-loading mechanism 23 of the reproducing device 6.

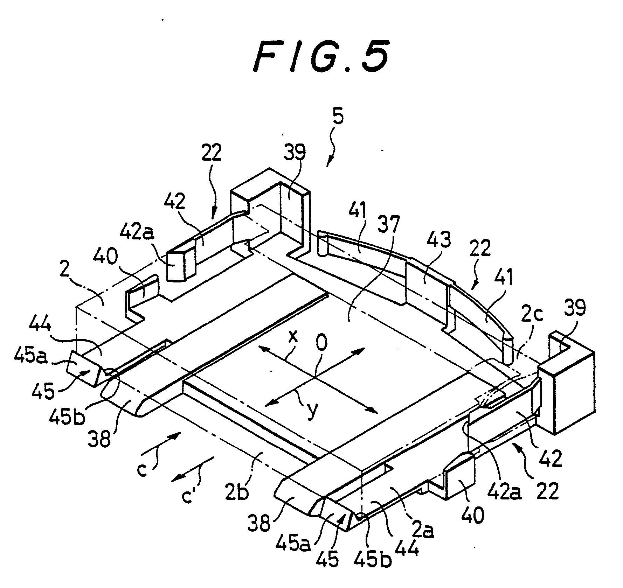

In the next, each store shelf 5 is described in detail by way of Figs. 5 to 8B.

The store shelf 5 is integrally molded from synthetic resin, such as polyacetal resin, and has a pair of right and left horizontal rails 38 provided on a horizontal base plate 37. Further, a pair of L-shaped corner walls 39 project upwards from the right and left ends of the rear portion of the base plate 37, and a pair of inserted guide walls 40 project upwards from the right and left ends of the base plate 37.

The store shelf 5 has a self-aligning means 22 formed integrally with the store shelf 5 to position the cassette 2 at the center both in the transverse direction (x direction) and in the longitudinal direction (y direction) on the base plate 37. Said self-aligning means 22 comprises a pair of right and left resilient rear arms 41 which extend along the rear end of the base plate 37, and a pair of right and left resilient side arms 42 which extend along the right and left sides of the base plate 37. The resilient rear arms 41 are formed integrally with the base plate 37 via a support wall 43, and also, the resilient side arms 42 are formed integrally with the base plate 37 via the corner walls 39. A pair of right and left stops 45 are formed in one body at the front ends of the base plate 37 via a pair of horizontal right and left resilient front arms 44. The resilient rear arms 41 are curved in a circular shape from the support wall 43 towards the front side (the side in the direction of arrow c'), and slopes 42 are formed inside the front end (the end of the side in the direction of an arrow c') of the resilient side arms 42, coupled with a gentle slope 45a and a steep slope 45b being formed in an angular shape on the stop 45.

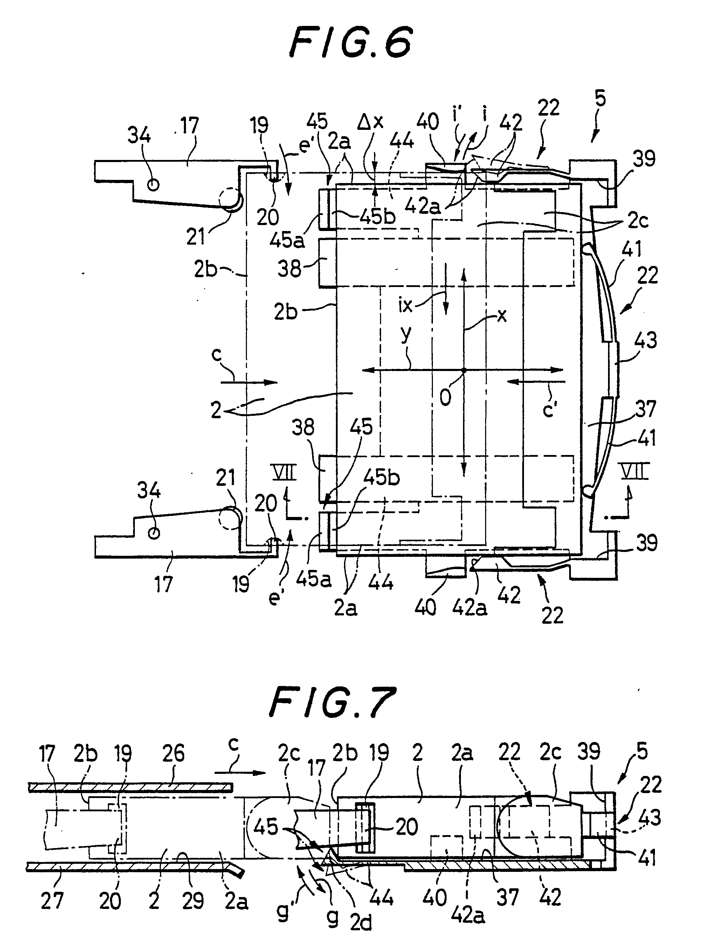

Next, a detailed description is made, by way of Figs. 6 to 8B, about the motion of delivering the cassette 2 by the pair of gripping means 17 between the store shelf 2 and the carriage 3.

As shown in Figs. 6 to 8B, when the cassette 2, gripped in both its sides by the pair of gripping means 17, are inserted horizontally in the direction of an arrow c from inside the cassette-loading platform 29 of the carriage 3 into the store shelf 5, a lower corner 2d of the front end of the cassette 2 is pressed against the gentle slope 45a of the stop 45 along the direction of an arrow c as shown by chain lines in Fig. 7, and both stops 45 are guided away to the direction of an arrow g with resistance against the elasticity of both resilient side arms 44, thereby allowing the cassette 2 to be inserted onto the horizontal rails 38 horizontally along the direction of arrow c. As shown by solid lines in Fig. 7, furthermore, when the cassette 2 is completely inserted onto the base plate 37, both stops 45 self-return in the direction of arrow g' by the elastic forces of both resilient side arms 44.

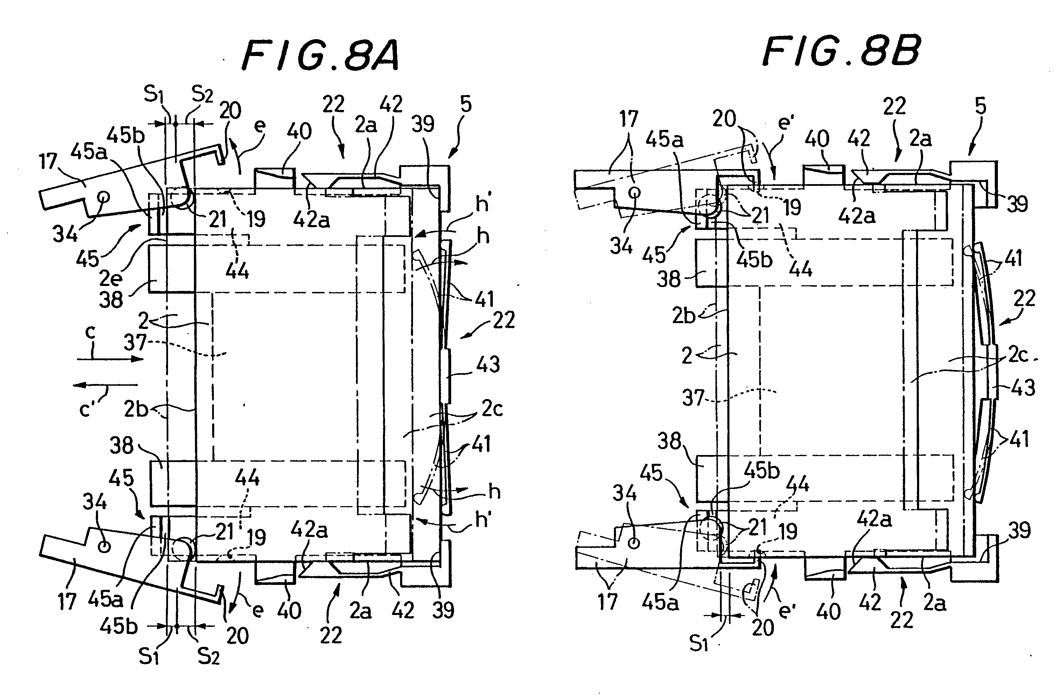

In this case, as shown by solid lines in Fig. 6, the pair of pawls 20 of the gripping means 17, which are closed in the direction of arrow e', are fitted into the pair of recesses 19 of the cassette 2, allowing the cassette 2 to be pushed out in the direction of arrow c. In the middle of this motion as shown in Fig. 8A, however, the pair of gripping means 17 are opened in the direction of arrow e, and the pair of rollers 21 push the rear side 2b of the cassette 2 in the direction of arrow c, thus allowing the cassette 2 to be inserted horizontally onto the base plate 37.

In such motion, as described above, since the cassette 2 is pushed in the direction of arrow c by as much as the stroke of $S_1 + S_2$ as shown in Figs. 3B and 3C, the front lid 2c of the cassette 2 is strongly pressed against both resilient rear arms 41 along the direction of arrow c, as shown by solid lines in Fig. 8A, thus causing these resilient rear arms to be curved in the direction of arrow h against their elasticity.

Subsequently, when the pair of gripping means 17 return in the direction of arrow c', as shown by chain lines in Fig. 8A, the cassette 2 is pushed back in the direction of arrow c' by the elastic forces of both resilient rear arms 41 in the direction of arrow h' on both horizontal rails 38, and the lower corners 2e of the rear end of the cassette 2 are thus brought in contact with the steep slopes 45b for positioning of the cassette.

In the above case, as shown by chain lines in Fig. 6, when a positional deviation of the carriage 3 from the store shelf 5 causes the cassette 2 to be inserted in a position which deviates, for example, by $\Delta x$ from the center 0 of the base plate 37, one side 2a of the cassette 2, while being guide by one guide wall 40, is pressed against the slope 42a of one resilient side arm 42, allowing said resilient side arm 42 to be curved in the direction of arrow i against its elasticity. Substantially at the same time with the completion of the insertion of the cassette 2 into the base plate 37 in the direction of arrow c, however, the cassette 2 is, as shown by solid lines in Fig. 6, transferred for adjustment in the direction of ix by the elastic force of one resilient side arm 42 in the direction of arrow i', and is then automatically positioned at the center 0 on the base plate 37.

In other words, the cassette 2, which has completed its insertion onto the base plate 37, has the rear lower corner 2e pressed against both stops 45 along the direction of arrow c' as well as its right and left sides 2a uniformly gripped by the right and left side resilient arms 42 in both its sides, and thus, the center of the cassette 2 coincides with the center 0 of the base plate 37 in the store shelf 5.

Thereafter, in addition, as shown by solid lines in Fig. 8B, when the carrier 3 goes in the direction of arrow c to receive the cassette 2 in the store shelf 5 by the pair of gripping means 17, the cassette 2 is, as describe above, pushed in the direction of arrow c by as much as the stroke $S_1$ shown in Fig. 3B by the pair of rollers 21 of the pair of gripping means 17; then, with the pair of gripping means 17 closed in the direction of arrow e', the pair of pawls 20 are fitted into the pair of recesses 19 of the cassette 2.

As described above, moreover, since the self-aligning action developed by a plurality of resilient arms 41 and 42 constituting the self-aligning means 22 allows the center of the cassette 2 to coincide with the center 0 of the base plate 37 in the store shelf 5, the pair of pawls 20 can be always accurately fitted into the pair of recesses 19 of the cassette 2.

As a result, the motion of delivering the cassette 2 can be performed smoothly and accurately by the pair of gripping means 17 between the store shelf 5 and the carriage 3. In addition, there is no need to specially equip the pair of gripping means 17 with a correction mechanism for positional deviations to deal with the positional deviation of $\Delta x$ as shown in Fig. 6.

The store shelf 5, which is molded from synthetic resin, can be simply manufactured in the process of one time molding together with the self-aligning means 22 as well as can share single parts with the self-aligning means 22. As a consequence, the structural simplification and cost reduction of the automatic cassette changer 1 as a whole can be increasingly achieved as the assembling of many store shelves 5 and the self-aligning means 22 is made more easily.

In accordance with the present invention, the self-aligning means 22 are acceptably composed of leaf springs separately provided and assembled into the store shelves 5.

Since the present invention is constituted as described above, it provides the following effects:

When the cassette is inserted into each store shelf from the carriage, the positional deviation of the carriage from each store shelf may cause the cassette to be inserted in a position deviating from the center of the store shelf. Despite this, the present invention has been so structured that the cassette as inserted can be positioned at the center inside the store shelf by the self-aligning means, thus enabling the smooth and accurate performance of the subsequent delivery motion for the cassette between each store shelf and the carriage.

Since the cassette can be positioned at the center of each store shelf, it becomes unnecessary to provide the cassette delivery means, which are fitted to the carriage and work between the respective store shelves, with any correction mechanism of positional deviations associated with the positional deviation of the carriage from each store shelf.

As shown in the embodiments, since each store shelf and the shelf-aligning means can be constructed as a single component if they are constituted by a molding which has been formed in one body with synthetic resin, the automatic cassette changer as a whole can attain its structural simplification and cost reduction as well.

As shown in Fig. 4A, in the first place, the rotary table 18 is mounted onto the substantially L-shaped base 25 which is sticked to the timing belt 10, and on the rotary table 18 there is provided the horizontal cassette loading portion 29 that is surrounded by the cover plate 26 and cassette loading plate 27, which are mounted horizontally in the upper and the lower portions having a space in between, and the pair of cassette guides 28 fitted to the lower surface of the cover plate 26 in a horizontal direction with a distance in between. The cover plate 26 and the cassette loading plate 27 are supported by a plurality of poles 30 and 31.

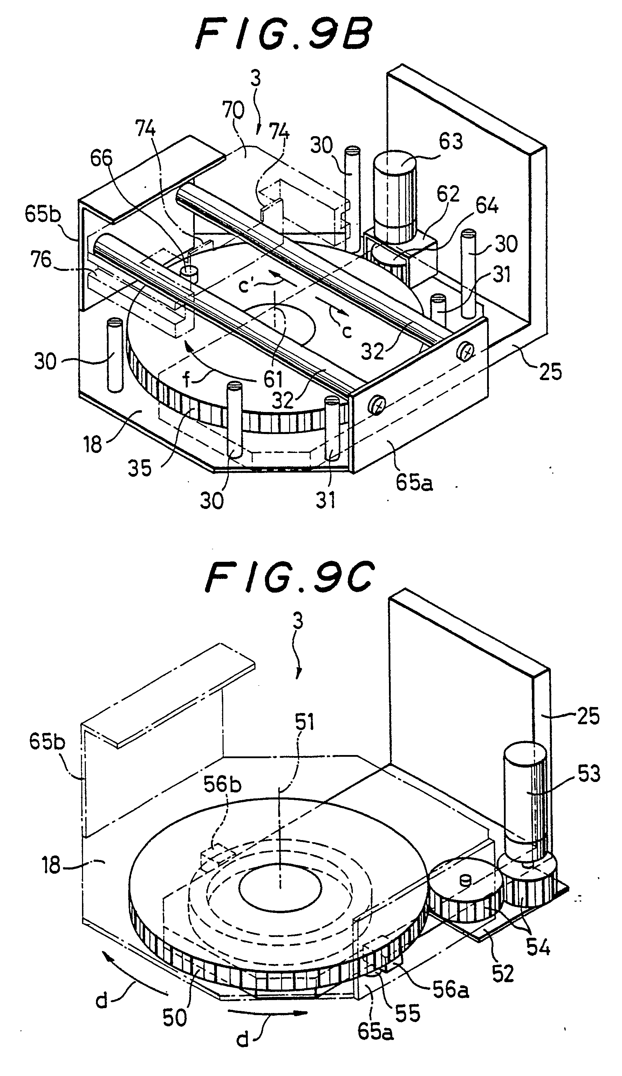

As shown in Fig. 9C, on the base 25 a horizontal large gear is provided rotatably around its vertical center axis of rotation 51, and the rotary table 18 is provided on said large gear 50. And the large gear 50 is driven to rotation in the direction of arrow d or d' by a servo-motor 53, which is mounted on the base 25 via a motor mounting plate, via a reduction gear 54. Then, a projection 55 sticked to the lower surface of the large gear 50 is made in contact alternately with a pair of stops 56a and 56b which are sticked onto the base 25, thereby controlling the rotational angles of the large gear 50 and the rotary table 18 at 180°.

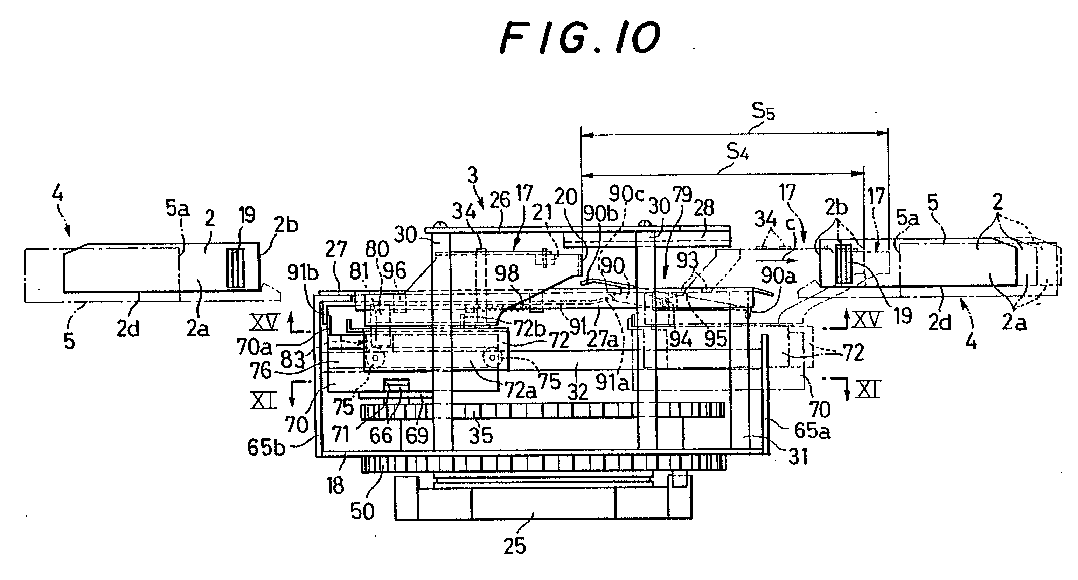

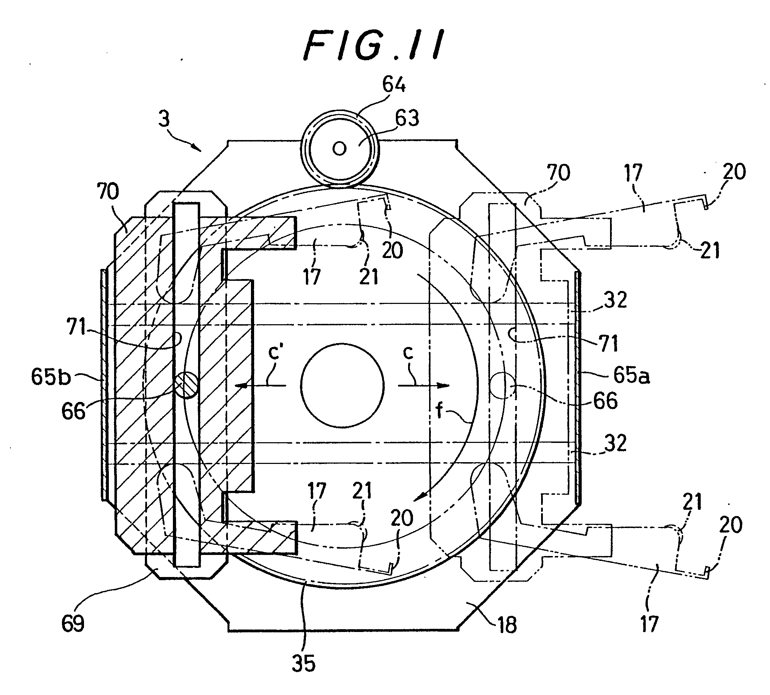

As shown in Fig. 9B, in addition, with the horizontal large gear 35 mounted rotatably around a vertical center axis of rotation 61 on the rotary table 18, the large gear 35 is driven through an angle of 360° in the direction of arrow f by a servo-motor 63 via a reduction gear 64. The servo-motor 63 is secured to the rotary table 18 through a mounting plate 62. With the pair of guide shafts 32 provided in the middle between the cassette loading plate 27 and the large gear 35 on the rotary table 18 and in parallel with the cassette guide 28, a slide table 70 guided by these guide shafts 32 are mounted rotatably in the direction of arrow c or c' paralleling the cassette guide 28 along the lower surface of the cassette loading plate 27. The guide shafts 32 are horizontally supported by a pair of longitudinal support plates 65a and 65b provided on the rotary table 18, and support plate 65b also supports the rear side of the cassette loading plate 27. A roller 66 comprising bearings mounted on the large gear 35 is inserted an elongate hole 71 which is provided on the lower surface of the slide table 70 as shown in Fig. 11 and is at a right angle to the guide 32. The elongate hole 71 is, as shown in Fig. 10, provided in a supplimentary plate 69 sticked to the lower surface of the slide table 70. As shown in Fig. 11, furthermore, by way of one revolution of the gear 35 in the direction of arrow f, the slide table 70 is driven at one reciprocation in the direction of arrow c or c' between a backward position (indicated in solid lines) and a forward position (indicated in chain lines) via the roller 66 and the elongate holoe 71.

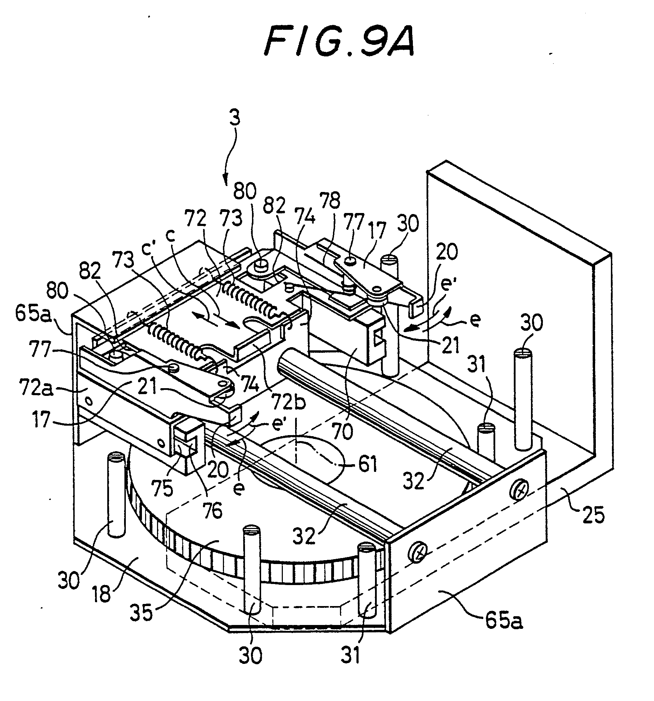

As shown in Fig. 9A, moreover, a horizontal slide plate 72 is provided on the slide table 70, and movable in the direction of arrow c or c'. The slide plate 72 is pushed against a pair of stops 70 provided on the front side of the slide table 70, in the direction of arrow c by a pair of tension springs 73. Both right and left ends 72a of the slide plate 72 are bent downwardly at a right angle, and each pair of rollers comprising bearings, which is mounted inside the right and left ends 72a are guided by a pair of guide grooves 76 provided horizontally on the right and left end surfaces of the slide table 70.

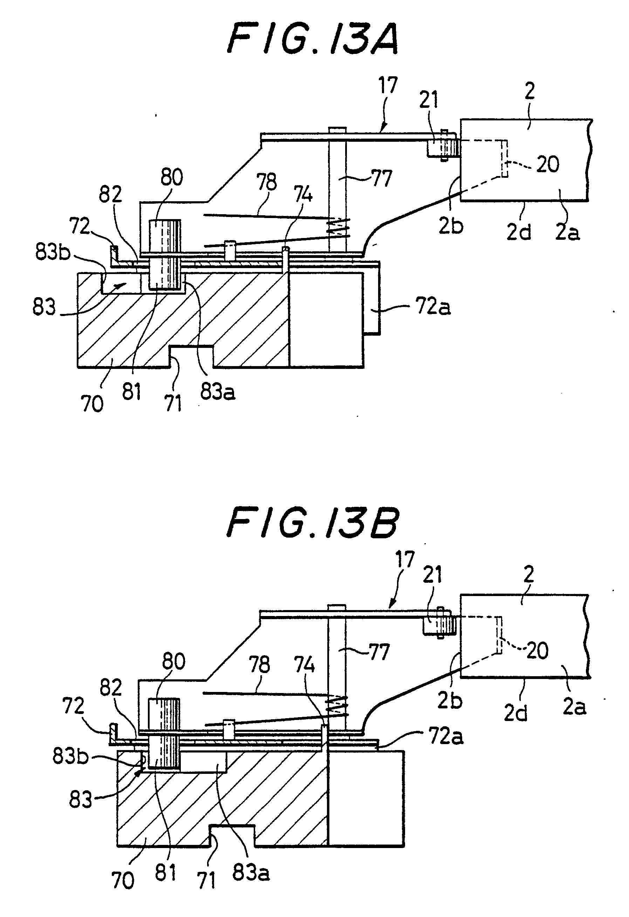

As shown in Figs. 4B and 9A, furthermore, the pair of the symmetrically provided right and left gripping means 17 are rotatably mounted on the right and left ends of the slide plate 72 in the direction of arrow e or e' via a pair of vertical fulcrum shafts 77, and the gripping means 17 are forced to be transferred in the direction of arrow e' by a pair of torsion coiled springs 78 (Fig. 13A) fitted into the outer circumference of the fulcrum shafts 77. And a pair of pawls 20 and a pair of rollers 21 of the right and left gripping means 17 are, as shown in Figs. 4B and 11, so constituted as to be transferred in the direction of arrow c or c' along the right and left ends of the cassette loading porion 79.

Next, each portion of the carriage 3 is hereinafter described in detail.

As shown in Figs. 12A to 13B, first, a pair of upper and lower rollers 80 and 81 are coaxially provided with each other at the rear end of the gripping means 17. The lower roller 81 is loosely fitted into an L-shaped guide groove 83 provided in the upper surface of the slide table 70, in the manner of penetration through an opening 82 of the slide plate 72. The entry of the lower roller 81 into a vicinity-of-center portion of the guide groove 83, as shown in Figs. 12A and 13A, allows the gripping means 17 to be opened in the direction of arrow e centering on the fulcrum shaft 34 in resistance against the torsion coiled spring 78; and the entry of the lower roller 81 into the remote-position-from-center portion 83b of the guide groove 83 allows the gripping means 17 to close in the diredtion of arrow e' by the torsion coiled spring 78 centering on the fulcrum shaft 77.

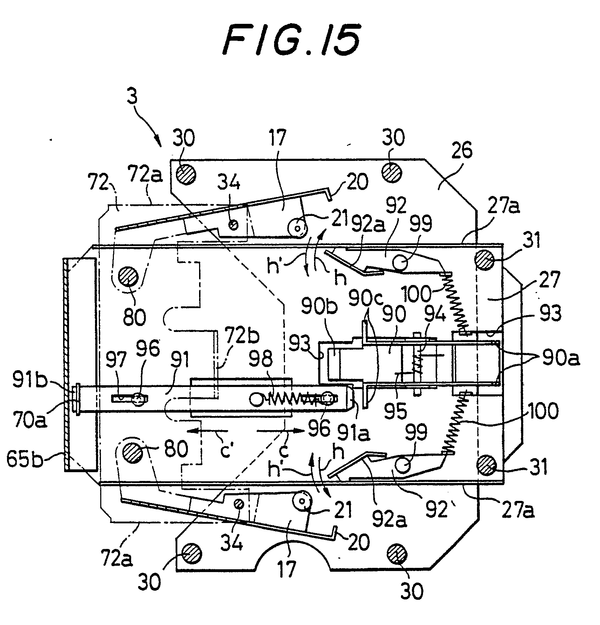

As shown in Figs. 10, 14A, 15, 16A and 16B, the lower surface of the cassette loading plate 27 is provided with a changeover means 90, a locking means 91, and a pair of right and left symmetric guide means 92. The changeover means 90 is placed in the lower part of an opening 93 provided substantially along the center of the front end of the cassette loading plate 27; and the means is provided movably in the direction of arrow g or g', which is an upward or downward direction, via a fulcrum shaft 94 and is forced to be moved in the direction of arrow g by a torsion coiled spring 95. On the front side of the changeover means 90 there is provided a hook portion 90a, which can be contacted along the direction of arrow c by a projection 72b provided at the center of the front side of the slide plate 72, and on the rear side there is provided a cassette detecting portion 90b, which is projected in the direction of arrow g from the opening 93 onto the cassette loading plate 27 and then brought into contact with the cassette 2. In addition, a pair of projections 90c, provided on the right and left sides of the rear of the changeover means 90, are made in contact with the lower surface of the cassette loading plate 27, thereby leading to the control of the transfer of the changeover 90 in the direction of arrow g. The locking means 91 is guided by a plurality each of guide pins 96 and elongate holes 97 to be fitted movably in the direction of arrow c or c′ in parallel to the slide table 70, and is forced to be transferred in the direction of arrow c by a tension spring 98. On the front side of the locking means 91 there is provided a locking portion 91a, which enters the upper part of one projection 90c of the changeover 90, and on the rear side there is provided a projection 91b, which a projection 70a provided in the upper part of the rear side of the slide table 70 can contact along the direction of arrow c′. The pair of guide means 92 has a guide plate 92a which guides the upper roller 80 of the pair of gripping means 17 and mounted movably in the direction of arrow h or h′ via a pair of fulcrum shafts 99. And these guide means 92 are forced to be transferred in the direction of arrow h by a pair of tension springs 100 and made in contact with the right and left ends 27a of the cassette loading plate 27, which are bent downwardly.

Next, the motion of delivery of the cassette 2 made between the stocker 4 and recording and/or reproducing device 6, and the carriage 3 is described in detail.

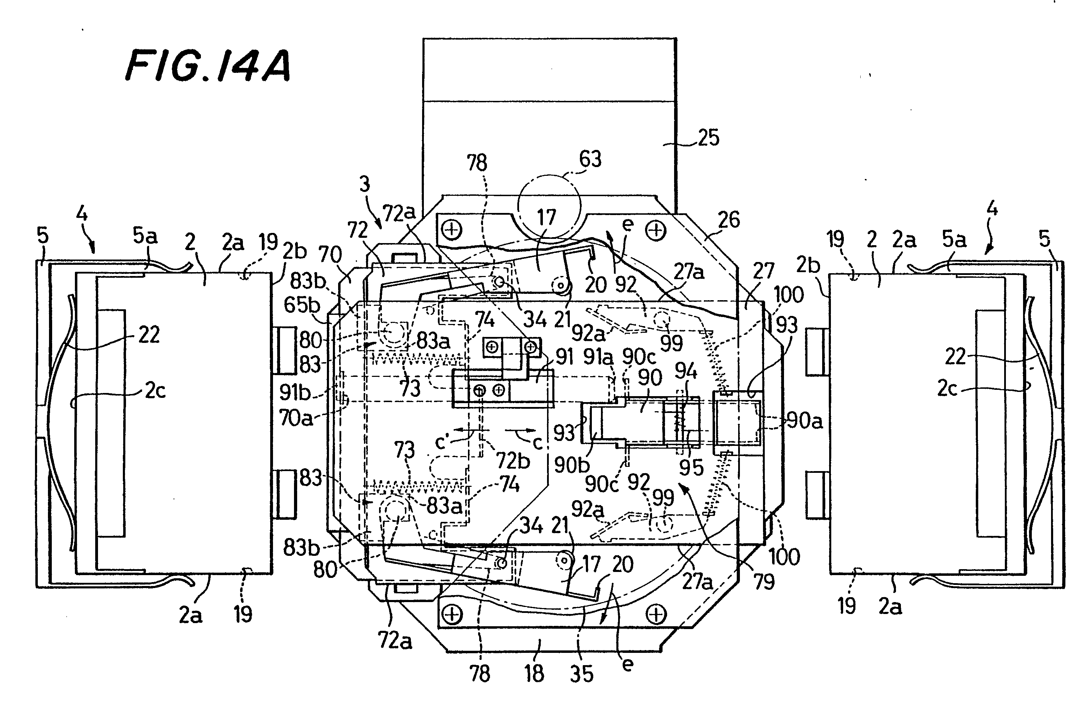

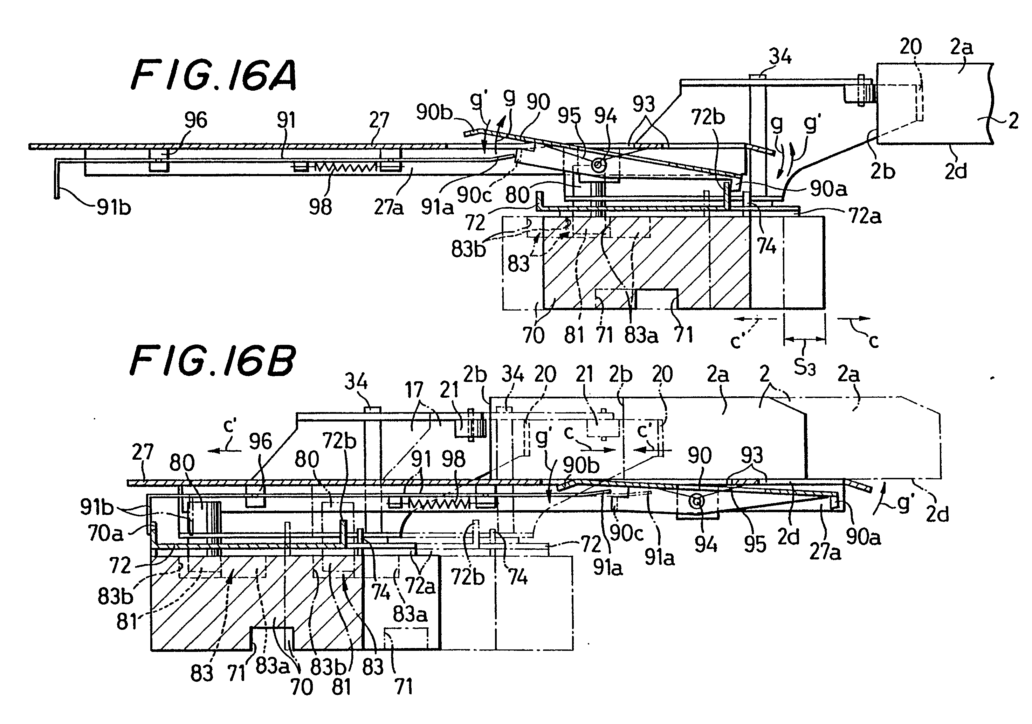

As shown in Figs. 14A and 10, when the carriage 3 goes in the direction of arrow c to receive the cassette 2 in each stored shelf 5 of the stocker 4 by way of the pair of gripping means 17, the lower roller 81 of the pair of gripping means 17, as shown in Figs. 12A and 13A, has made entry into the vicinity-of-center portion of the pair of guide grooves 83 of the slide table 70, with the pair of gripping means 17 kept open in the direction of arrow e. Due to no presence of the cassette 2 in the loading portion 79, the changeover means 90, as shown in Fig. 16A, is turned in the direction of arrow g, allowing the cassette detecting portion 90b to be projected on the cassette loading plate 27. As shown in Fig. 16B, moreover, the projection 70a of the slide table 70 is made in contact with the projection 91b of the locking means 91 and transferred in the direction of arrow c′ in resistance against the tension spring 98 of the locking means 91.

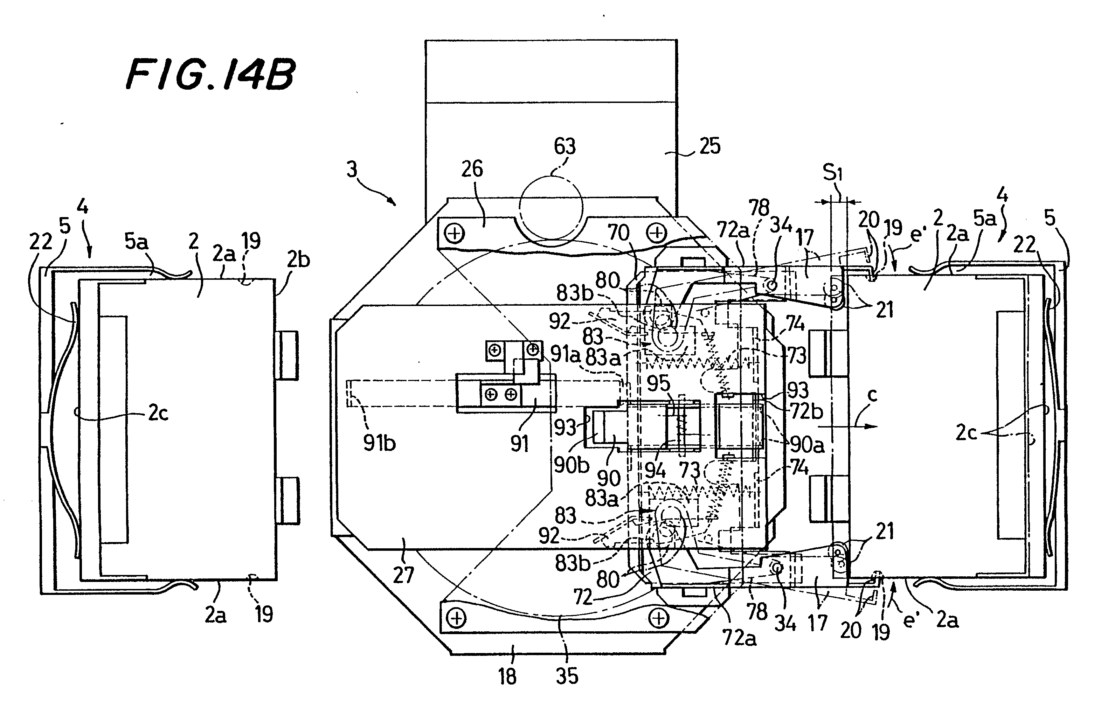

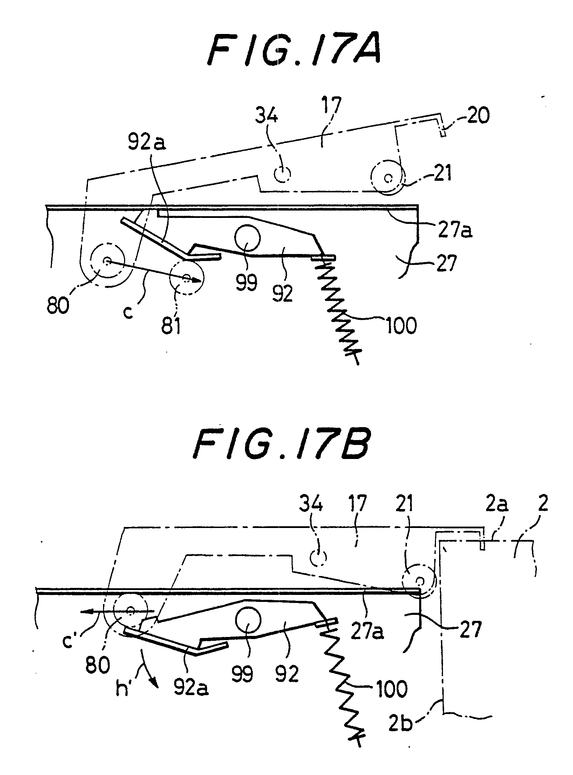

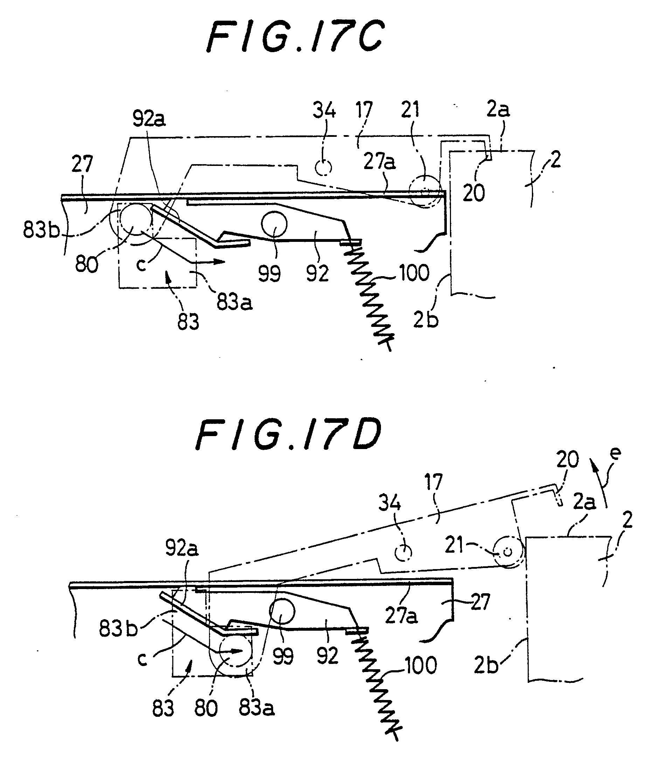

In such a state, as shown in Fig. 11, the large gear 35 is turned by 360° in the direction of arrow f by wary of the servo-motor 63. The half turn of the large gear 35 in turn allows the slide table 70 to be transferred in the direction of arrow c from a backward position (shown by solid lines) to a forward position (shown by chain lines) as in Fig. 11; and said slide table 70 then causes the pair of gripping means 17 to be transferred in one body with the slide plate 72 from a backward position as shown by solid lines in Figs. 14A and 10 to a forward position. as shown by chain lines in Figs. 14B and 10, thus leading to the insertion of said gripping means 17 into the store shelf 5. With the slide table 70 transferred in the direction of arrow c, the locking means 91 is transferred in the direction of arrow c by the tension spring 98 as shown in Fig. 16A, and the locking portion 91a is then made in contact with one projection 90c of the changeover means 90. Furthermore, the pair of upper rollers 80 of the pair of gripping means 17, which are transferred in the direction of arrow c by the slide table 70, pass through inside the guide plate 92a of the pair of guide means 92 in the direction of arrow c in the manner of running on the plate a little as shown in Fig. 17A.

When the pair of rollers 21 of the pair of gripping means 17, which are inserted into the store shelf 5 along the direction of arrow c, push the rear side 2b of the cassette 2, as shown by chain lines in Fig. 14B, into the store shelf 5 by as much as the stroke $S_1$ of about 3 mm in the direction of arrow c in resistance against the spring means 22 in the store shelf 5, the projection 72b of the slide plate 72, as shown in Fig. 16A, is made in contact with the hook portion 90a of the changeover means 90 along the direction of arrow c, and the slide plate 72 and the pair of gripping means 17 above it then stop at that position. On the other hand, in the instant that said slide plate 72 stops, the slide table 70 is at a position shown by chain lines in Fig. 16A, and is in turn transferred to a position (shown by solid lines in Fig. 16A) by as much as the stroke $S_3$ in the direction of arrow c. This time, both tension springs 73 are stretched, causing the slide plate 72 to be made relatively apart from the stop 74 in the direction of arrow c′.

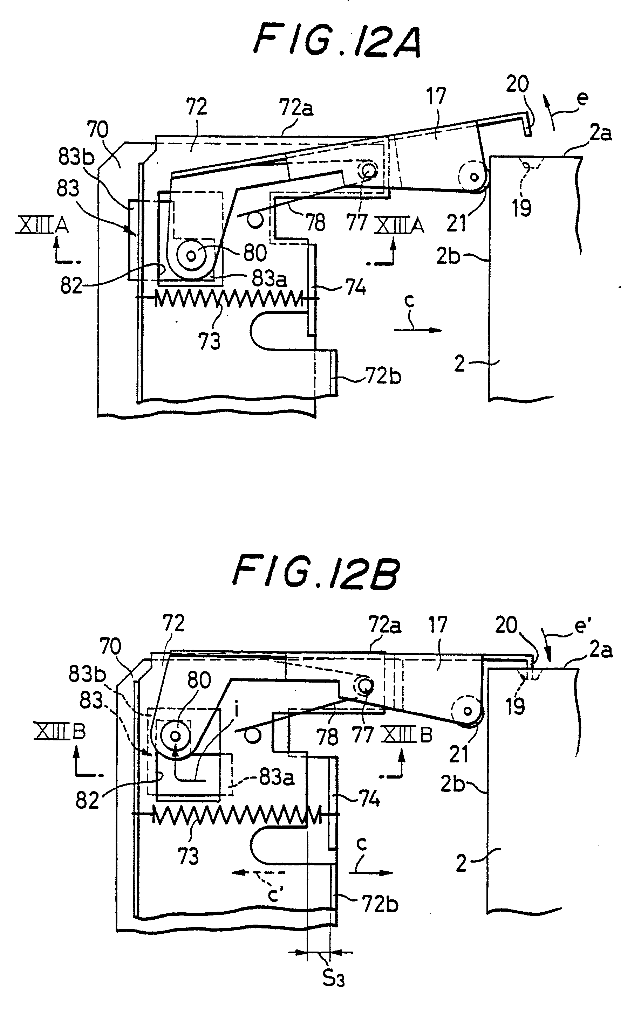

With the slide table 70 transferred in the direction of arrow c by as much as the stroke $S_3$ in line with the slide plate 72, the lower roller 81 of the pair of gripping means 17, as shown in Figs. 12B and 13B, makes entry into the remote-of-center portion 83b in the direction of arrow i from the vicinity-of-center portion of 83a of the pair of guide grooves 83 of the slide table 70, and the pair of gripping means 17 are closes in the direction of arrow e′ as shown Figs. 14B and 12B. Then, the hawls 20 of the pair of gripping means 17 are fitted into the pair of recesses 19 of the right and left sides of the cassette 2 from both sides.

In the above mentioned case, the pair of gripping means 17 are inserted in the store shelf 5 in the direction of arrow c with no cassette being present in the cassette loading portion 29 of the carriage 3. However, since the pair of gripping means 17 are stopped by the changeover means 90 via the slide plate 72 in the middle of transfer of the slide table 760 in the directtion of arrow c, the stroke $S_4$ for insertion of the pair of gripping means 17 into the store shelf 5 as shown by a chain line in Fig. 10 is constituted to be small.

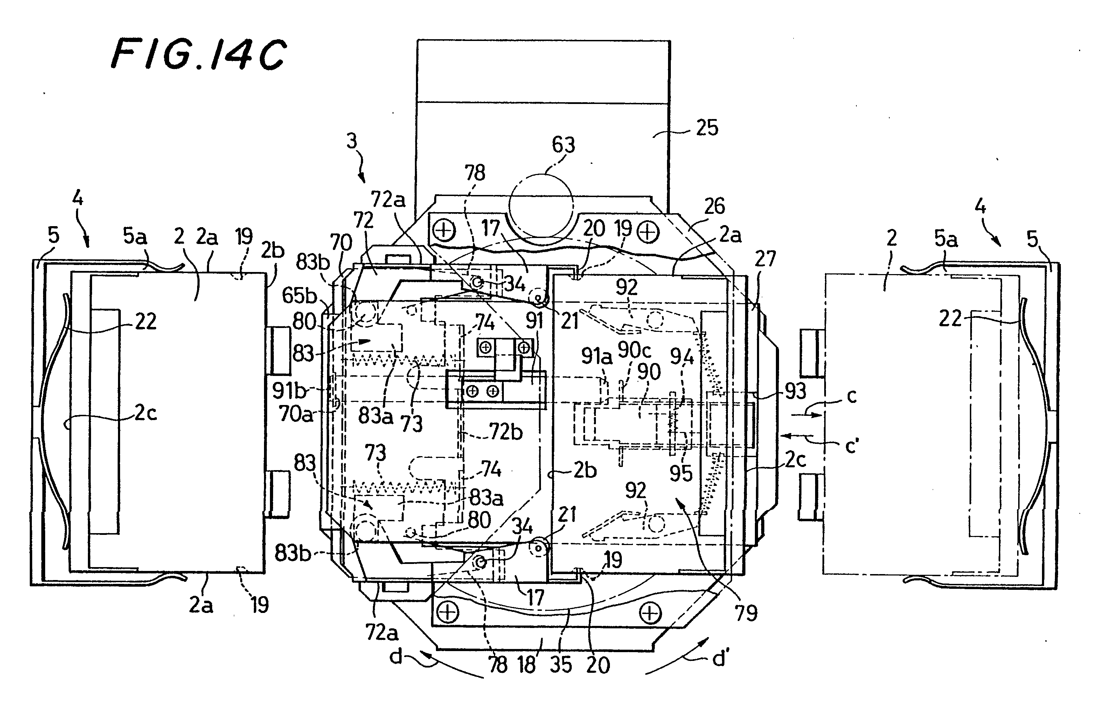

Thereafter, as shown in Fig. 11, the remaining half turn of the large gear 35, which is turned 360° by the servo-motor 63 in the direction of arrow f, causes the slide table 70 to be transferred in the direction of arrow c' from a forward position (chain line) to a backward position (solid line), and said slide table 70 allows the pair of gripping means 17 to be transferred in the direction of arrow c' up to a backward position as shown in Fig. 14C. And by way of the pair of pawls 20 of the pair of gripping means 17, the cassette 2 in the store shelf 5 is, as shown in Fig. 14C, received into the cassette loading portion 29 of the carriage 3 in the direction of arrow c'. On this occasion, the cassette 2, while being guided between the pair of cassette guides 28, is loaded on the cassette loading plate 27. In addition, the pair of upper rollers 80 of the pair of gripping means 17, which are transferred by the slide table 70 in the direction of arrow c', pass through outside the guide plate 92a in the direction of arrow c' while turning the pair of guide means 92 in the direction of arrow h' in resistance against the tension spring 100 as shown in Fig. 17B. As shown by solid lines in Fig. 16B, moreover, the cassette detecting portion 90b of the changeover means 90 is pushed downward by a bottom 2d of the cassette 2 which is loaded on the cassette loading plate 27 along the direction of arrow c', leading to the turn of said changeover means 90 in the direction of arrow g' in resistance against the torsion coiled spring 95. When the slide table 70 is transferred to the backward position in the direction of arrow c', as shown by solid lines in Fig. 16B, the locking means 91 is again transferred by the projection 70a of the slide table 70 in the direction of arrow c' in resistance against the tension spring 98.

Thus, the motion of receiving the cassette 2 from inside the store shelf 5 into the carriage 3 is completed, stopping the drive by the servo-motor 63 to the 360° turn of the large gear 35.

Thereafter, as shown in Fig. 9C, the 180° turn of the large gear 32 is driven by the servo-motor 53, and the rotary table 18 of the carriage 3 is then driven to 180° turn in the direction of arrow d or d' as in Fig. 14C.

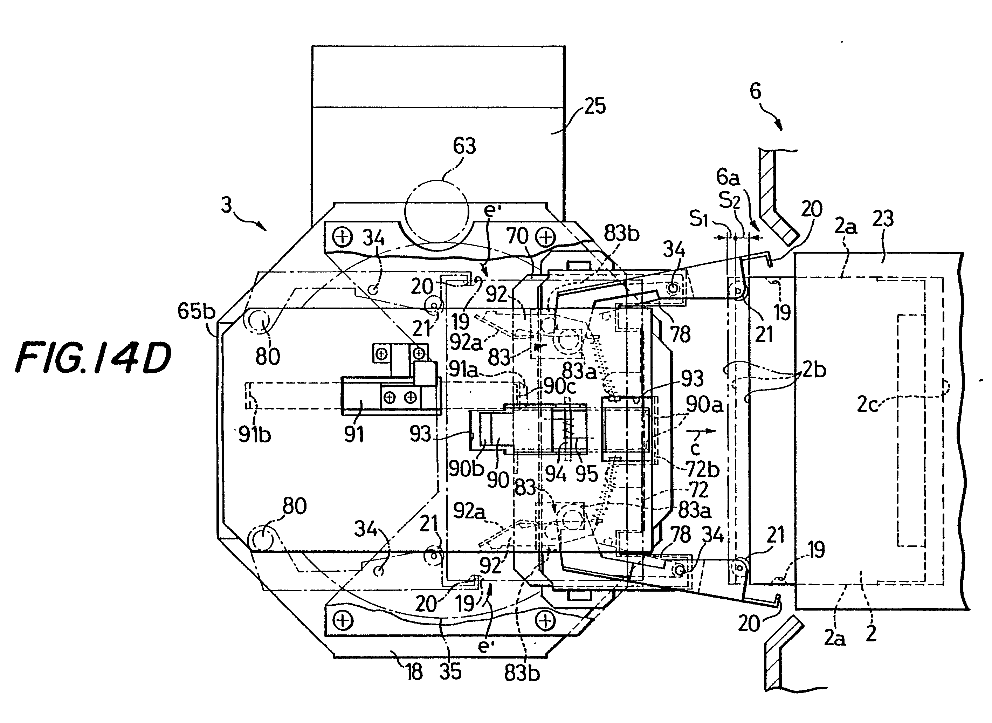

Next, as shown in Fig. 14D, when the cassette 2 in the carriage 3 is inserted into a cassette insertion opening of the recording and/or reproducing device 6 along the direction of arrow c, again as shown in Fig. 11, the servo-motor 63 allows the 360° turn of the large gear 35 in the direction of arrow f; and in the same manner as described above, as s result that the slide table 70 is transferred from a backward position shown by solid lines to a forward position shown by solid lines in Fig. 11, the pair of gripping means 17 in one body with the slide plate 29 is transferred from the backward position shown by chain lines to the forward position shown by solid lines in the direction of arrow c.

In the above-mentioned case, the pair of gripping means 17 is transferred in the direction of arrow c while remaining closed in the direction of arrow e as shown by chain lines in Fig. 14D, and the cassette 2 in the cassette loading portion 29 is pushed out in the direction of arrow c by the pair of pawls 20 and inserted into the frontal-loading mechanism 23 from the cassette insertion opening 6a in the direction of arrow c.

On this occasion, furthermore, in the instant that the slide table 70 is transferred in the direction of arrow c, the locking means 91 is transferred in the direction of arrow c by the tension spring 98 as shown by chain lines in Fig. 16B and is inserted into the upper part of one projection 90c of the changeover means 90, and the locking portion 91a is inserted in the upper part of one projection 90c of the changeover means 90, which is turned in the direction of arrow g', and locks the hook portion 90a of the changeover means 90 in the state that it has been turned in the direction of arrow g'. This time, as a consequence, the projection 72b of the slide plate 72, which is transferred in the direction of arrow c in one body with the slide plate 70, passes through in the direction of arrow c below the hook portion 91a of the changeover 90.

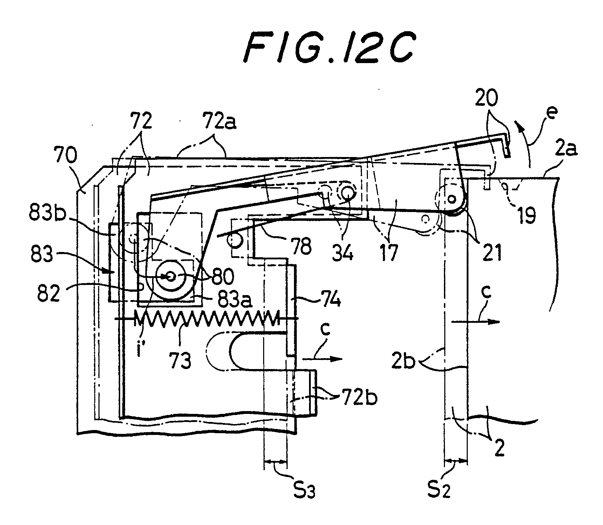

During the course that the cassette 2 is inserted into the frontal-loading mechanism 23 in the direction of arrow c, the pair of upper rollers 80 of the pair of gripping means 17, which is transferred by the slide stable 70 in the direction of arrow c, ride on the inside of the guide plate 92a of the pair of guide means 92 as shown in Fig. 17D, and the pair of gripping means 17 is in turn opened in the direction of arrow e in resisance against the torsion coiled spring 78 as shown in Figs. 17D and 12C.

Then, in that instant, as shown in Fig. 12C, the slide plate 72 is transferred by as much as the above-mentioned stroke $S_3$ in the direction of arrow c from a position shown by chain lines to a position in contact with the stop 74 shown by solid lines by the pair of slide plates 73 in line with the slide table 70, and the lower rollers 81 of the pair of gripping means 17 then enter the vicinity-of-center portion 83a from inside the remote-of-center portion of the pair of guide grooves 83 of the slide table 70 in the direction of arrow i'.

Consequently, as shown by chain lines in Fig. 12, with the cassette 2 pushed out in the direction of arrow c by the pair of pawls 20 of the pair of gripping means 17, which are transferred by the slide table 70 in the direction of arrow c and then inserted into the frontal-loading mechanism 3, the pair of gripping means 17 are opened in the direction of arrow e as shown by solid lines in Fig. 12. And with the rear side 2b of the cassette 2 in turn pushed by the pair of rollers 21 in the direction of arrow c, the cassette 2 is inseted into the frontal-loading mechanism.

In this case, with the presence of the cassette in the cassette loading portion 29 of the carriage 3, the pair of gripping means 17 are inserted into the cassette insertion opening 6a of the recording and/or reproducing device 6, whereas the slide plate 72 is in no way stopped by the changeover means 90 in the middle of the transfer of the slide table 70 in the direction of arrow c, and the pair of gripping means 17 are greatly transferred to the forward position of the slide table 70 in the direction of arrow c, so that the stroke of insertion of the pair of gripping means 17 into the cassette insertion opening 6a becomes an insertion stroke $S_5$, which is larger than the above-mentioned insertion stroke $S_4$ as shown by dotted lines in Fig. 10.

In this case, moreover, as shown in Fig. 12C, as a result that the slide plate 72 is transferred by the pair of tension springs 73 by as much as the stroke $S_3$ in the direction of arrow c in line with the slide table 70, the pair of rollers 21 of the pair of gripping means 17 strongly press the rear side 2b of the cassette 2 by as much as the stroke $S_3$ in the direction of arrow c, so that the cassette 2 is strongly inserted into the frontal-loading mechanism 23 in the direction of arrow c by as much as the stroke $S_2$ of about 6 mm, further than the above-mentioned stroke $S_1$ of about 3 mm, as shown by two-dot chain lines and dotted lines in Fig. 14D.

This enables the cassette 2 to be strongly inserted deep into the frontal-loading mechanism 23 in the direction of arrow c.

Subsequently, in the same manner as described above, the slide table 70 transfers the pair of gripping means 17 in one body with the slide plate 72 to a position shown by solid lines in Figs. 14A and 10 in the direction of arrow c', thus stopping the drive of the large gear 35 to 360° turn given by the servo-motor 63. When the slide table 70 is transferred to the backward position in the direction of arrow c' and the locking means 91 is in turn, as shown by solid lines in Fig. 16B, again transferred in the direction of arrow c' by the projection 70a of the slide table 70 in resistance against the tension spring 98, the locking portion 91a slips out in the direction of arrow c' from the upper portion of one projection 90c of the changeover means 90. Then the locking of the changeover means 90 is released, and with no presence of the cassette 2 in the cassette loading portion 29, as shown in Fig. 16A, the changeover means 90 is turned in the direction of arrow g by the torsion coiled spring 95. Thus, the cassette detecting portion 90b is again projected on the cassette loading plate 27, and the carriage then returns to its original state.

As described above, the carriage 3 of this automatic cassette changer 1 changes the rotational motion of the large gear 35, which is driven to 360° turn by a driving means, that is, one servo-motor (which many not necessarily be a servo-motor) 63, into the linear motion of the slide table 70, and drives the pair of gripping means 17 to a linear round trip between the backward and the forward position by means of the slide table 70. Driving of the pair of gripping means 17 to opening and closing by a mechanical control method utilizing the linear motion of the slide table 70; and in this case, dependent upon the presence of the cassette 2 in the carriage 3, the pair of gripping means 17 can be driven to be opened or closed in an accurate timing.

In other words, when the carriage 3 has no cassette inside, it is allowed to move forward with the pair of gripping means 17 kept opened to take the cassette 2 in the reproducing device 6; and when having a cassette inside, it is allowed to move forward with the pair of gripping means 17 kept closed and then inserts the cassettes 2 into the stoker 4 or the reproducing device 6.

Thus, since two driving means for the round-trip drive or opening and closing drive of the pair of gripping means 17 can be constructed with one motor 63, the pair of gripping means 17 can be allowed to perform accurately with no erroneous motion a series of motion such as gripping the cassette 2 in each store shelf 5 of the stoker 4 and taking it into the carriage 3 as well as inserting into the reproducing device 6 the cassette 2 as taken into the carriage 3.

In addition, since the 360° turn of the large gear 35 caused by the motor 63 enables a series of delivery motion of cassettes between the stoker 4 and recording and/or reproducing device 6, and the carriage 3, access time can be shortened to no more than about 1.4 seconds.

Since it has been designed that dependent upon the presence of the cassette 2 in the carriage 3, the stroke for the insertion of the pair of gripping means 17 into the stoker 4 and the reproducing device 6 can be switched to the two-stage insertion strokes of $S_4$ and $S_5$, the cassette 2 can be inserted sufficiently deep into the reproducing device 6 due to the large insertion stroke of $S_5$ when the cassette 2 in the carriage 3 is inserted into the reproducing device 6. Therefore, it is not necessary at all to provide any special cassette receiving means to take the cassette 2 into the reproducing device 6, so that the autoloading of the cassette 2 can be performed by utilizing a common frontal-loading mechanism 23 a it is.

Because of the above-mentioned construction, the present invention exhibits the effects as described below.

The automatic cassette changer of the present invention has been so constructed as to be able to allow the delivery of a cassette with a stocker and a reproducing device by a pair of gripping means provided in a carriage and then go to receive the cassette in the stocker and the reproducing device form the carriage by the pair of gripping means. As a result, without providing each store shelf of the stocker and the reproducing device with any special cassette pushing-out mechanism to push out the cassette to the side of the carriage, the delivery of the cassette between the stocker and reproducing device, and the carriage can be performed accurately as well as smoothly. Since no special cassette pushing-out mechanism has to be provided in each store shelf of the stocker and the reproducing device at all, the structures of such each store shelf and a reproducing device can be greatly simplified, coupled with a marked reduction in cost.

Moreover, since the automatic cassette changer of the present invention has been so constructed as to enable the cassette to be inserted sufficiently deep into the reproducing device when the cassette is inserted into the reproducing device from the carriage by the pair of gripping means, there is no need at all to provide the reproducing device with any special cassette receiving mechanism to take the cassette, and a common frontal-loading mechanism can be utilized as it is, thus enabling a marked decrease in cost.

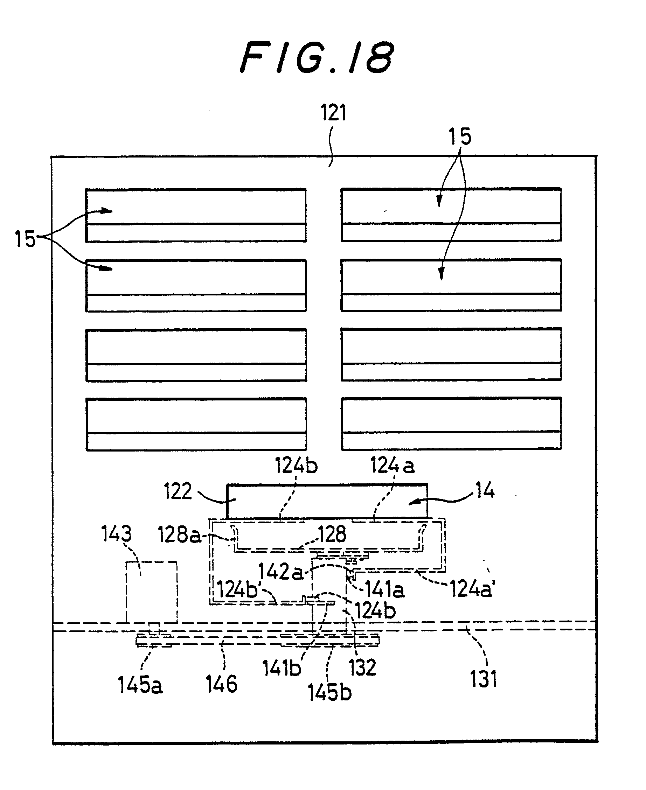

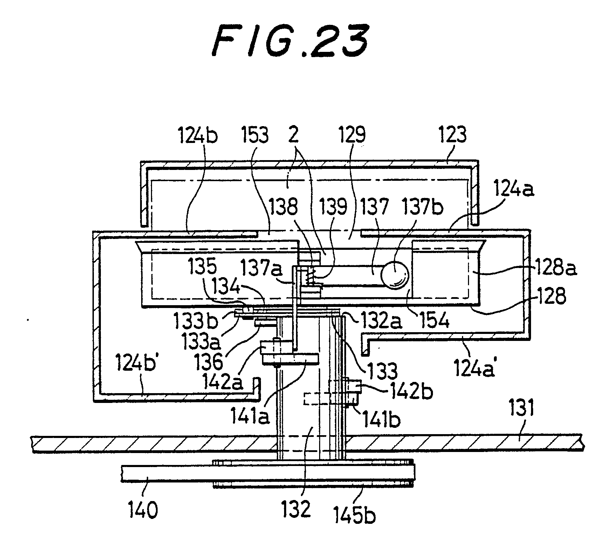

Next, the cassette-in port 14 will be described in detail based on Figs. 18 to 24.

A cassette insertion guide with its horizontal section being substantially U-shaped is provided inside a casette insertion opening 122 as provided in a front panel 121. And below the cassette guide 123 there are provided a pair of horizontal slide tables 124a and 125b, which are constructed so as to be able to slide horizontally at a right angle to the horizontal direction (direction of arrow e) of cassette insertion from the cassette insertion opening 122 qnd in a horizontal direction opposite to each other (direction of arrow f or g). While these slide tables 124a and 124b are guided by a guide mechanism (not illustrated herein) to slide in the direction of f or g, it is so structured as to be forced by a plurality of tension springs 125 to slide in the direction of f′ or g′ and then made in contact with stops 126a and 126b to be stopped.

Below both slide tables 124a and 124b there is a horizontal tray 128, and the shape of the horizontal section of a wall 128a as elected above said tray 128 is formed in a U shape. Therefore, said tray 128 has its two sides such as an upper side and one side made open, an upper side opening formed in a cassette landing port 129, and a side opening formed in a cassette feed-out port 130. And a vertical rotary shaft 132 is mounted on a horizontal bottom panel 131 rotatably in the direction of arrow h or h′, and the tray 128 is mounted above a top end 132a of the rotary shaft 132 rotatably in the direction of arrow h or h′. Then, a pair of pins 132 and 135 are gripped between both ends 133 and 133b of a torsion spring 133 which is wound around the outer circumference of the top end 132a of the rotary shaft 132, and one pin 134 is sticked to the outer circumference of the rotary shaft 132 via a projection 136 of one pin 134, with the other pin 135 being sticked to the lower portion of the tray 128. A crooked lever 137 is mounted rotatably in the direction of arrow i or i′ via a vertical fulcrum pin 138 on an opposite side to the cassette feed-out portion 130 of the tray 128, and said crooked lever 137 is forced by a torsion spring 139 to turn in the direction of arrow i.

Both slide tables 124a and 124b have the shapes of their vertical sections constructed in a U-shaped symmetry, and their lower sides 124a′ and 124b′ turn about below the tray 128 with a difference in level between above and below.

A pair of rollers 142a and 142b comprising bearings are mounted on the tips of a pair of rotary arms 141a and 141b, which are sticked to the outer circumference of the rotary shaft 132 and have a difference in level between above and below, and these rollers 142a and 142b are so constructed as to be made in contact with, or apart from, the lower side 124a′ and 124b′ of both slide tables 124a and 124b along the horizontal direction. One roller 142a is so constructed as to be able to be also made in contact with, or apart from, the one end 137a of the crooked lever 137. A motor shaft 144 of a servo-motor 143 mounted on the bottom panel 131, and the rotary shaft 132 are allowed to move jointly via a pair of timing belt pulleys 145a and 145b and a timing belt 146. In addition, having alternate contact by a pair of projections 147a and 147b provided on the side of the tray 128, a pair of stops 148a and 148b to stop the rotation of the tray 128 are provided.

The cassette-out port 15 is formed on a simple horizontal shelf 150 which is constructed in a plurality of stages in upward or downward and right or left directions, and the front of each horizontal shelf 150 is provided with a cassette take-out port 151.

Next description is made about the work of loading the cassette 2 on an automatic cassette changer utilizing the cassette-in port 14.

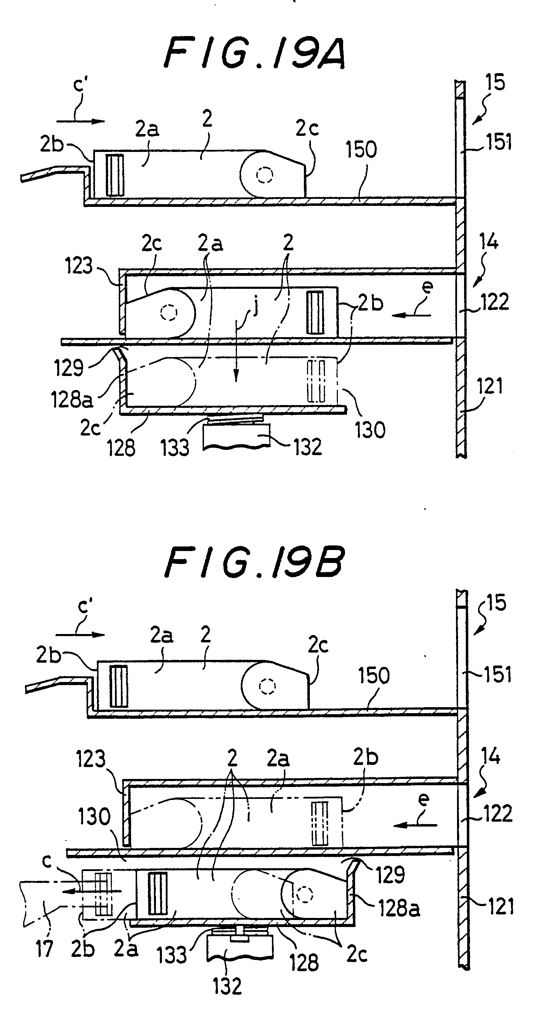

First, as shown by solid lines in Figs. 19A and 20 and 21, the operator inserts the cassette 2 into the cassette insertion opening 122 from the side of the front lid 2c thereof in the direction of arrow e and then places said cassette 2 on both slide tables 124a and 124b in the cassette insertion guide 123. On this occasion, furthermore, the operator reads the code number of the cassette 2 as inserted a bar-code lable 152 sticked to the rear side of the cassette 2 as inserted and then puts said code number into the console panel 16 as shown in Fig. 1 by operating the ten keys 1 of the console panel 16.

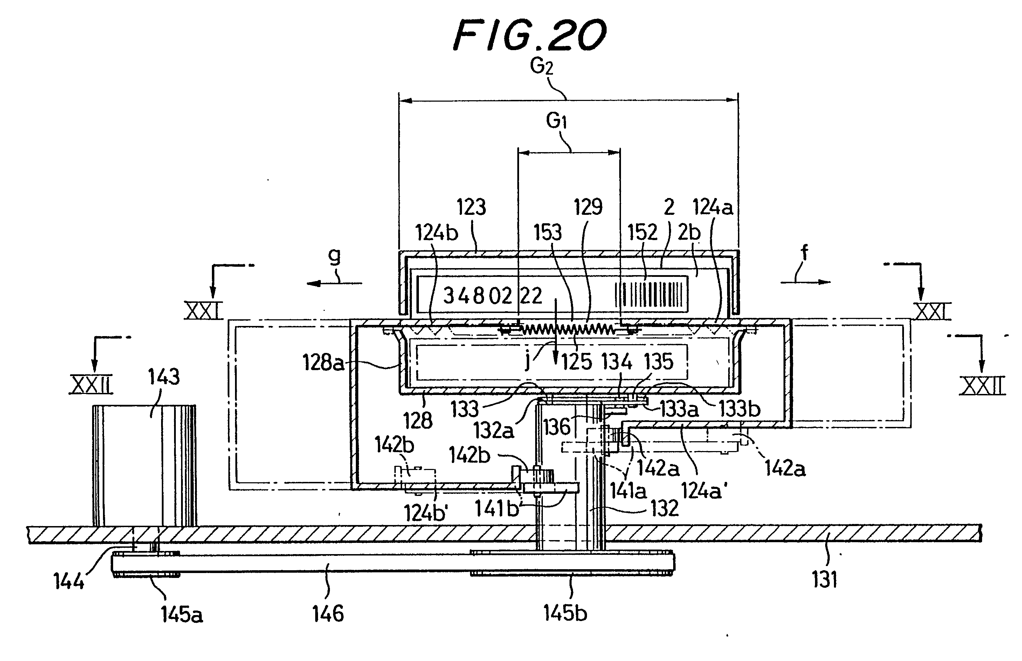

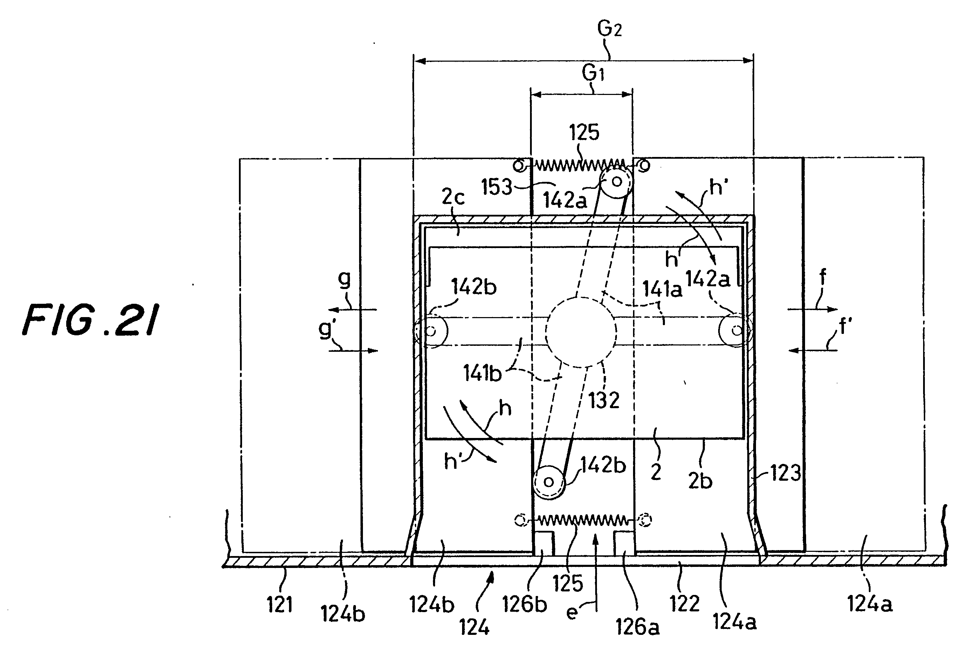

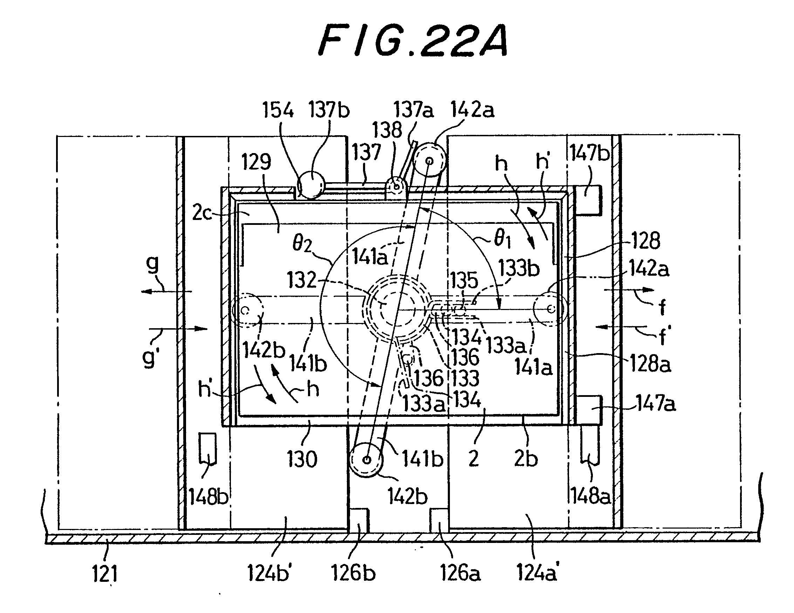

When the above-mentioned cassette insertion is detected by a sensor (not illustrated herein) or the like, the servo-motor 143 will be driven, and the rotary shaft 132 is clock-wise turned by $\theta_1$, an angle within 90° in the direction of arrow h via the timing belt 146. Then, as shown by chain lines in Figs. 20 and 21, both rollers 142a and 142b of the tips of both rotary arms 141a and 141b pushes the lower sides 124a' and 124b' are allowed to slide in the direction of f or g in resistance against the tension spring 25. Thus, a space 153 between both slide tables 124a and 124b, are allowed to fall, as shown by chain lines in Figs. 19A and 20, into the tray 128 by their own weights horizontally in the direction of arrow j from the space 123 via the cassette landing port 129. On this occasion, as shown in Fig. 22A, since one projection 147a of the tray 128 is made in contact with the stop 148a along the direction of arrow h, the tray 128 is not turned at all, but only one end 133a of the torsion spring 133 is moved in the direction of arrow h to a position, which is shown by chain lines in Fig. 22A, by the pin 134 of the rotary shaft 132.

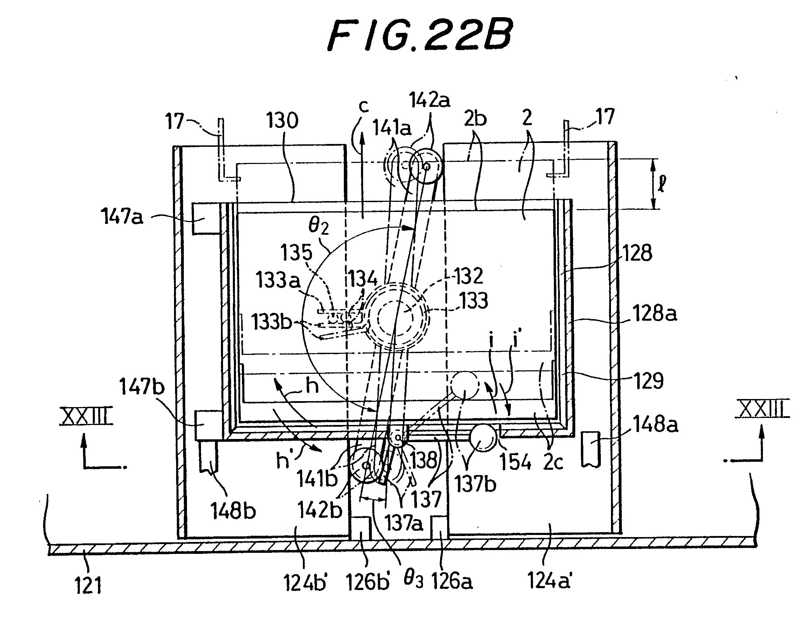

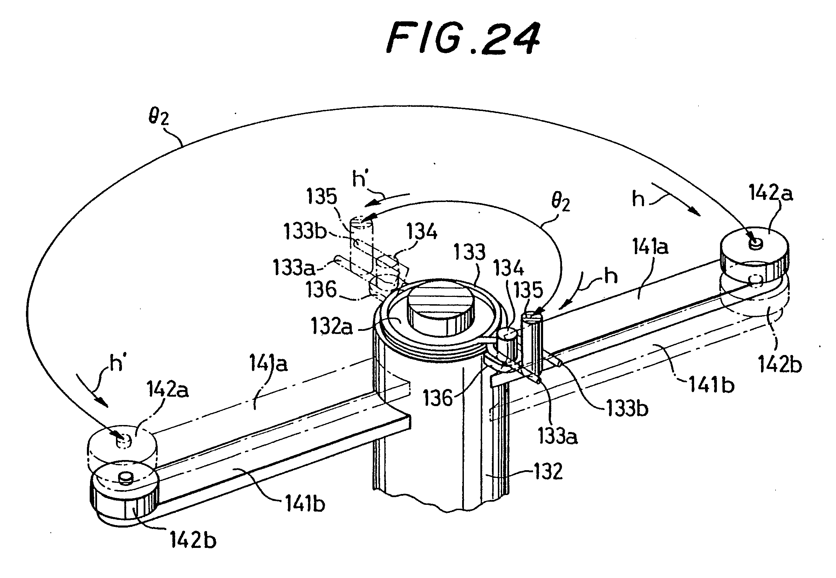

After the fall of the cassette 2 into the tray 128, the rotary shaft 132 is in turn reversely turned round by the servo-motor 143 in the direction of arrow h' in Fig. 22A. This time, after returning in the direction of arrow h' by an angle $\theta$, the rotary shaft 132 is reversely turned round first by $\theta$, an angle of 180°, continuously in the direction of arrow h'. Then, as shown in Fig. 24, since the pin 135 of the tray 128 is driven by a same angle $\theta_2$ in the direction of arrow h' via the other end 33b of the torsion spring 133 by the pin 134 of the rotary shaft 132, the tray 128 is inversed by 180° inthe direction of arrow h' from the state in Fig. 22A to that in Fig. 22B. As shown in Fig. 22B, furthermore, the other projection 147b of the tray 128 is made in contact with the other stop 148b along the direction of arrow h', allowing the tray 128 to stop at a position where it is inversed by 180°. And the inversion of said tray 128 causes the cassette 2 in the tray 128 to be inversed, and the rear side 2b of the cassette 2 shown in Fig. 19B is then directed towards to the side of the carriage 3 shown in Fig. 1.

In this case, furthermore, the inversion of both rotary arms 141a and 141b by the angle of $\theta_1$ in the direction of arrow g', as shown by solid lines in Figs. 20 and 21, allows both slide tables 124a and 124b to be moved back in the direction of arrow f' or g' by the tension swing 125 and again made in contact with the stops 126a and 126b. The reverse turn of both rotary arms 141a by the angle of $\theta_2$ in the direction of arrow g' allows both rollers 142a and 142b to be made apart from the lower ends 124a' and 124b' in the direction of arrow h'.

After the turn of the 180° inversed tray 128 in the direction of arrow h' is stopped by the stop 148b, the servo-motor 143 allows the rotary shaft 132 to be reversely turned round by a given angle of $\theta_3$ continuously in the direction of arrow h' in Fig. 228. Then, one roller 142a pushes one end 137a of the crooked lever 137 in the direction of arrow h', and the said crooked lever 137 is turned round in the direction of arrow i' in resistance against the torsion spring 139. As a result, the other end 137b of the crooked lever 137 is inserted into the tray 128 from a notch 154, which is provide- to the wall 128a of the tray 128, and pushes the front lid 2c of the cassette 2 in the direction of arrow c, so that, as shown by chain lines in Figs. 19B and 22B, the side of the rear side 2b of the cassette 2 in the tray 128 is then pushed out from the cassette feed-out port 130 to the side of the carriage 3 by a certain distance 1 in the direction of arrow c. On this occasion, since the tray 128 does not turn round, only the other end 132b of the torsion spring 132 is moved to a position shown by chain lines in Fig. 22B in the direction of arrow h' by the pin 134 of the rotary shaft 132.

Subsequently, as shown by chain lines in Figs. 19B and 22B, with the right and left sides 2a of the cassette 2 gripped by the pair of gripping means 17 of the carriage 2, the cassette 2 is drawn out from the cassette feed-out port 130 into the carriage 3 in the direction of arrow c and is then admitted into the carriage 3. As described in Fig. 1, the carriage 3 allows said cassette 2 to be carried into a given store shelf 5 to meet the code number of the stocker 4 and stored therein.

Then, the servo-motor 143 allows the rotary shaft 132 to be repeatedly moved to the original position shown by solid lines in Fig. 22A in the direction of arrow h, and the crooked lever 137 is repeatedly moved by the torsion spring 139 from a position shown by chain lines in Fig. 22B to a position likewise shown by solid lines in the direction of arrow i', and the tray 128 is inverted by 180° in the direction of arrow h from a position in Fig. 22B to a position in Fig. 22A by the pins 134 and 135 and thus returns to its original position.

In accordance with this cassette-in port 14, however, it has been so constructed that the cassette 2, which is inserted in the direction of arrow e from the cassette insertion opening 122 as shown by solid lines in Fig. 19A and is placed on both slide tables 124a and 124b, is allowed to fall into the tray 128 in the direction of arrow j as shown by chain lines in Fig. 19A and then inverted by 180° as shown by solid lines in Fig. 19B to be fed out in the direction of arrow c from the cassette feed-out port 130 into the carriage 3. As a consequence, utilizing the time up till the carriage 3 comes to receive the cassette 2 in the tray 128 as shown by solid lines in Fig. 19B, the operator can, as shown by two-dot chain lines in Fig. 19B, insert the next cassette 2 from the cassette insertion opening 122 onto both slide tables 124a and 124b along the direction of arrow e and read the code number by a bar-code label 152 of said cassette 2, thus entering said number into the console panel 16 in Fig. 1.

When the cassette 2 is taken out from the automatic cassette changer 1, the successive entry of the code number of the cassettes 1 into the console panel 16 in Fig. 1 allows the cassettes 2, which the carriage 3 have taken out from the given store shelves 5 in correspondence with the code numbers of the stockers 4, to be successfully fed out into a plurality of horizontal shelves 150 of the cassette-out port 15 as shown in Figs. 19A and 19B in the direction of arrow c'.

Having described illustrative embodiments of the present invention with reference to the accompanying drawings, it is to be understood that the invention is not limited to such precise embodiments, and that various changes and modifications may be effected therein by one skilled in the art without departing from the scope and spirit of the invention as defined in the appended claims.

For example, the above-mentioned embodiment has shown an apparatus which has been designed to perform the many-hour continuous reproduction of the cassettes 2 by using the reproducing devices 6 exclusively used for reproduction, but it can be so constructed that both the continuous recording and the continuous reproduction over many hours can be carried out with the recording and/or reproducing devices which can perform recording and reproduction.

In addition, the present invention is not limited to the automatic changer of video tape cassettes, but can be applied to the automatic changer of audio tape cassettes or disk cassettes.

The present invention exhibits the following effects because of its constrsuction as described above;

Because the present invention has been so constrsucted that a cassette, which has been inserted from the cassette insertion opening of a cassette-in port to be placed on a slide table, is once allowed to fall in a tray below it and then loaded on a stocker by a carriage, the invention enables the operation of inserting the next cassette onto the slide table from the cassette insertion opening and then entering the code number of the cassette inserted, into a console panel by utilizing the time until the carriage comes to receive the cassette that has been allowed to fall in the tray.

As a result, the time until the carriage comes to receive the cassette which has been allowed to fall in the tray does not become a wasteful waiting time, so that the operation of loading many cassettes on the stocker one after the other can be performed efficiently and in a short time.

## Claims

1. An automatic cassette changer (11) comprising:
a plurality of store shelves (5) for accomodating respective cassettes (2);
at least one reproducing device (6) for reproducing information from a recording medium accomodated in the cassette (2); and
a carriage (3) to transport the cassette (2), which has been accomodated in the store shelf (5), to the reproducing device (6);
characterized in that said store shelf (5) comprises:
    a) a base plate (37) on which said cassette (2) is held; and
    b) first urging means (42) disposed at opposite sides of said base plate (37) so as to press respective right and left sides of said cassette (2) toward the center of said base plate (37) when said cassette (2) is placed on said base plate (37).

2) An automatic cassette changer (1) comprising:
a plurality of store shelves (5) for accomodating respective cassettes (2);
at least one reproducing device (6) for reproducing information from a recording medium accomodated in the cassette (2); and
a carriage (3) to transport the cassette (2), which has been accomodated in the store shelf (5), to the reproducing device;
characterized in that said store shelf (5) comprises:
    a) a base plate (37) on which said cassette (2) is held;
    b) stop means (45) which is provided at a front end of said base plate (37), and abuts against a rear end of said cassette (2) under a state that said cassette (2) is placed on said base plate (37); and
    c) additional urging means (41) which is provided at a rear end of said base paste (37) so as to have a front end of said cassette (2) brought into contact therewith under a state that said cassette (2) is placed on said base plate (37) to urge said cassette (2) so that said rear end of the cassette (2) may abut said stop means (45).

3. An automatic cassette changer according to claim 1, characterized in that said store shelf (1) further comprises:
    a) stop means (45) which is provided at a front end of said base plate (37), and abuts against a rear end of said cassette (2) under a state that said cassette (2) is placed on said base plate (37); and

b) additional urging means (41) which is provided at a rear end of said base plate (37) so as to have a front end of said cassette (2) brought into contact therewith under a state that said cassette (2) is placed on said base plate (37) to urge said cassette (2) so that said rear end of the cassette (2) may abut said stop means (45).

4. An automatic cassette changer according to claim 1 or claim 3, characterized in that said base plate (37) is formed integrally with said first urging means (42) when molded from synthetic resin.

5. An automatic cassette changer according to claim 2 or or claim 3, characterized in that said base plate (37) is formed integrally with said additional urging means (41) and said stop means (45) when molded from synthetic resin.

6. An automatic cassette changer according to claim 1, 3 or 4, characterized in that said first urging means (42) comprises a pair of resilient arms, one end of each of which is fixed to said base plate (37), and the other end of each of which is free.

7. An automatic cassette changer according to claim 2, 3 or 4, characterized in that said additional urging means (41) is a resilient arm, one end of which is fixed to said base plate (37); and the other end of which is free.

8. An automatic cassette changer according to anyone of claims 2, 3, 5 and 7, characterized in that said stop means (45) is elastically deflected by pressure from said cassette (2), when said cassette (2) is taken in by and out from said store shelf (5).

9. An automatic cassette changer according to anyone of claims 1 to 8, characterized in that said cassette accomodated in said store shelf (5) has recesses (19) at the respective sides thereof.

10. An automatic cassette changer according to claim 9, characterized in that said carriage (3) has a pair of arms (20) to be engaged with said respective recesses (19).

# F I G. 1

EP 0 407 305 A2

# FIG.2

16

FIG.3A

FIG.3B

FIG.3C

# FIG.4A

# FIG.4B

# FIG.5

EP 0 407 305 A2

# FIG.6

# FIG.7

20

# FIG.8A

# FIG.8B

EP 0 407 305 A2

# FIG.9A

# FIG.9B

# FIG.9C

# FIG.10

EP 0 407 305 A2

FIG. II

EP 0 407 305 A2

# FIG.12A

# FIG.12B

26

EP 0 407 305 A2

# FIG.12C

27

# FIG.13A

# FIG.13B

# FIG.14A

EP 0 407 305 A2

# FIG.14B

EP 0 407 305 A2

# FIG.14C

EP 0 407 305 A2

FIG.14D

EP 0 407 305 A2

# FIG.15

# FIG.16A

# FIG.16B

EP 0 407 305 A2

# FIG.17A

# FIG.17B

# FIG.17C

# FIG.17D

# FIG.18

# FIG.19A

# FIG.19B

# FIG.20

EP 0 407 305 A2

FIG.21

EP 0 407 305 A2

# FIG.22A

EP 0 407 305 A2

# FIG.22B

EP 0 407 305 A2

# FIG.23

# FIG.24